(19) Europäisches Patentamt / European Patent Office / Office européen des brevets

(11) **EP 2 139 951 B1**

(12) **FASCICULE DE BREVET EUROPEEN**

(45) Date de publication et mention de la délivrance du brevet:
**23.01.2019 Bulletin 2019/04**

(21) Numéro de dépôt: **08805718.7**

(22) Date de dépôt: **28.04.2008**

(51) Int Cl.:
**C08L 95/00** *(2006.01)*     **C08K 5/521** *(2006.01)*
**C09D 195/00** *(2006.01)*     **E01C 7/22** *(2006.01)*
**E01C 19/10** *(2006.01)*     **E04B 1/66** *(2006.01)*
**E01C 7/18** *(2006.01)*     **E01C 7/26** *(2006.01)*

(86) Numéro de dépôt international:
**PCT/FR2008/050764**

(87) Numéro de publication internationale:
**WO 2008/148974 (11.12.2008 Gazette 2008/50)**

(54) **PROCEDE DE PREPARATION D'ENROBES A BASE DE PRODUITS BITUMINEUX ET LEURS UTILISATIONS**

VERFAHREN ZUR HERSTELLUNG VON AUF BITUMENPRODUKTEN BASIERENDEN BESCHICHTETEN MATERIALIEN UND VERWENDUNGEN DAVON

METHOD FOR PREPARING COATED MATERIALS BASED ON BITUMINOUS PRODUCTS AND USES THEREOF

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **26.04.2007 FR 0754724**

(43) Date de publication de la demande:
**06.01.2010 Bulletin 2010/01**

(73) Titulaire: **ARKEMA FRANCE**
**92700 Colombes (FR)**

(72) Inventeurs:
• **BARRETO, Gilles**
**Messimy, 69510 (FR)**
• **GRAMPRE, Lionel**
**Sainte Foy Les Lyon, 69110 (FR)**

(74) Mandataire: **Schaefer, Anne-Sophie et al**
**ARKEMA France**
**Département Propriété Industrielle**
**420, rue d'Estienne d'Orves**
**92705 Colombes Cedex (FR)**

(56) Documents cités:
**US-A- 2 592 564       US-A- 3 053 905**
**US-A- 3 270 631       US-A1- 2002 006 880**
**US-B1- 6 261 356**

• **COMITÉ EUROPÉEN DE NORMALISATION: "EN 12697-3 rev for approval for UAP"[Online] avril 2003 (2003-04), pages 1-15, XP002514331 Extrait de l'Internet: URL:http://www.eapa.org/draft/downloads/EN%2012697-3.pdf> [extrait le 2009-02-10]**
• **LUIZ C.C. CARVALHO: "Sugar/Alcohol as an industrial raw material"[Online] 9 juillet 2006 (2006-07-09), pages 1-10, XP002514332 Berlin Extrait de l'Internet: URL:http://www.www.bdi.eu/Dokumente/Internationale-Maerkte/Carvalho_ABAG_Sugar.pdf> [extrait le 1009-02-10]**
• **Anonymous: "Fatty alcohol - Wikipedia, the free encyclopedia", , 9 July 2015 (2015-07-09), pages 1-7, XP055206850, Retrieved from the Internet: URL:https://en.wikipedia.org/w/index.php?title=Fatty_alcohol&printable=yes [retrieved on 2015-08-07]**

## Description

Domaine de l'invention

La présente invention concerne le domaine de l'étanchéité, la construction et l'entretien de tapis routiers, de trottoirs et pistes d'aviation où l'on utilise des mélanges de granulats et de produits bitumineux.

Dans le cadre de la présente invention, on entend par produits ou liants bitumineux, le bitume naturel et les bitumes issus d'une huile minérale et les mélanges qui en résultent. Les bitumes obtenus par craquage et les goudrons sont aussi ici considérés comme produits bitumineux au sens de la présente invention, ainsi que les mélanges qui peuvent en résulter. Les résidus de distillation sous vide, de distillation, de précipitation (comme par exemple au propane), les bitumes soufflés sont des exemples considérés dans le cadre de cette invention.

On considère également ici les bitumes dilués à l'aide de solvants pétroliers, les bitumes dilués à l'aide d'huiles végétales et les bitumes polymères. Les produits bitumineux listés ci-dessus sont anhydres, autant que faire se peut à l'échelle de production industrielle concernée.

Au sens de la présente invention, on entend par granulats des matériaux minéraux divisés produits en carrière, des agrégats d'enrobés, des fraisats, des mâchefers, des scories et des laitiers, des recyclats de démolition du béton, ainsi que les mélanges qui en résultent. Selon la présente invention, des fibres organiques ou inorganiques peuvent être intégrées au mélange de granulats et de produits bitumineux. À titre d'exemple ces fibres peuvent être des fibres de verre, de carbone, de cellulose, de coton, de polypropylène, de polyester, de poly(alcool vinylique), de poly(acétate de vinyle), de polyamide, des fibres métalliques.

Dans tout ce qui suit, le mélange de granulats et de produits bitumineux sera également appelé « enrobé ».

De nombreux procédés de production des mélanges de granulats et de produits bitumineux sont actuellement utilisés. On peut les classer en trois classes distinctes : les procédés de production à température ambiante, les procédés à une température supérieure à 100°C et les procédés à des températures intermédiaires entre température ambiante et 100°C, c'est-à-dire pour lesquels un apport d'énergie thermique à la production de l'enrobé est nécessaire tout en permettant la présence d'eau liquide dans l'enrobé.

Les procédés de production d'enrobés à température ambiante sont ceux pour lesquels la production du mélange entre liant bitumineux et granulats se fait sans apport d'énergie thermique. On peut citer l'enrobage de granulats à l'aide de bitume additivé d'un solvant volatil de manière à le rendre suffisamment fluide à température ambiante pour permettre un bon enrobage des granulats. L'enrobé est par la suite mis en oeuvre à l'aide du matériel adapté permettant le transport, la dépose et le compactage. Cette technique tend à disparaître car elle consomme des solvants en quantités importantes, solvants qui en étant évaporés dans l'atmosphère créent une pollution évitable par d'autres techniques.

On peut citer également les techniques de production utilisant comme vecteur du bitume, les émulsions ou dispersions de bitume dans un solvant aqueux. L'émulsion ou dispersion de bitume est mélangée avec les granulats de manière à assurer un bon enrobage. Le mélange obtenu est ensuite mis en oeuvre à l'aide du matériel adapté permettant le transport, la dépose et le compactage éventuel. Ces techniques ont l'avantage de concentrer la phase où de fortes températures sont rencontrées dans une usine où a lieu la fabrication de l'émulsion. Les granulats utilisés à température ambiante peuvent contenir de l'eau. Ces techniques ne nécessitent donc pas de traitement thermique des granulats, ce qui limite la consommation d'énergie lors de la production de l'enrobé et la production de poussières. De plus, le mélange étant à température ambiante, c'est-à-dire entre environ 5°C et 30°C, les émissions de composés organiques volatils sont très faibles. Cependant, les performances mécaniques obtenues avec ces mélanges sont en général en retrait par rapport à celles obtenues avec d'autres techniques décrites ci-dessous, notamment au jeune âge. Cette technique a trouvé son créneau dans l'entretien routier pour des chaussées faiblement à moyennement sollicitées, par exemple routes du réseau secondaire, parkings de logements individuels ou collectifs, d'immeubles, pistes cyclables....

Les procédés à température supérieure à 100°C utilisent le bitume sous forme anhydre, dans un état de fluidité suffisant pour assurer un bon enrobage des granulats. De manière à assurer un bon enrobage et de bonnes performances mécaniques finales, il est classique de sécher les granulats et de les porter à une température proche de celle du bitume. Il existe deux types principaux de procédés : les procédés continus et les procédés discontinus.

Dans un procédé continu, les granulats entrent de manière continue dans un cylindre possédant un brûleur qui permet le chauffage des granulats par rayonnement de flamme. Dans une zone du cylindre non exposée au rayonnement, les granulats venant de la zone de séchage sont enrobés par le bitume liquide avant de sortir et d'être acheminés vers une trémie de stockage tampon.

Dans un procédé discontinu, on dispose d'un malaxeur maintenu à haute température dans lequel sont versées de manière discontinue les différentes fractions granulométriques de granulats. Celles-ci sont homogénéisées par malaxage puis le bitume est rajouté par versement. À la suite du malaxage, le mélange entre granulats et produit bitumineux obtenu peut être stocké en trémie. Le mélange obtenu est ensuite mis en oeuvre à l'aide du matériel adapté permettant le transport, l'épandage et le compactage éventuel.

Le mélange obtenu est transporté et déposé suffisamment chaud de manière à assurer un bon épandage, un bon lissage et un bon compactage éventuel. Le choix des températures du procédé dépend de la classe du bitume (donc de sa pénétration ou pénétrabilité) et est généralement réglementé. L'inhomogénéité des températures dans les granulats et leurs mélanges avec les produits bitumineux entraîne une disparité sur les températures qui sont moyennées avec une imprécision de ± 5°C.

Aux États-Unis d'Amérique, pour les enrobés à chaud (Hot Mix Asphalt), la référence est la norme AASHTO PP28. Elle indique, en fonction de la viscosité du produit bitumineux, la gamme de température entre granulats et produit bitumineux pour le mélange, pour le compactage.

Pour les bétons bitumineux et les graves bitumes en France par exemple, les températures des mélanges entre granulats et produits bitumineux en sortie de centrale, avec un bitume pur de pénétration 35/50, sont généralement de 150°C à 170°C, voire de 160°C à 180°C quand les conditions météorologiques sont plus dures ; pour l'épandage, la température des mélanges entre granulats et produits bitumineux est supérieure à 130°C.

La norme française NF P 98-150 de janvier 2008 constitue la référence sur l'exécution des corps de chaussées, couches de liaison et couche de roulement en enrobés hydrocarbonés, la norme française NF P 98-130 de novembre 1999 constitue la référence pour les bétons bitumineux semi-grenus et la norme française NF P 98-138 de novembre 1999 constitue la référence pour les graves bitumes.

Elles imposent une température en sortie de centrale de 150°C à 170°C et une température d'épandage de 130°C minimum pour un bitume pur de pénétration 35/50, et pour un bitume pur de pénétration 70/100 en sortie de centrale de 140°C à 160°C et une température d'épandage de 120°C minimum. Il n'y a pas de contrainte sur la température de compactage, mais celui-ci est effectué immédiatement après l'épandage du mélange de manière à avoir la température de début de compactage la plus proche possible de la température du mélange à l'épandage. C'est en effet le maintien du bitume dans un état suffisamment liquide et donc suffisamment chaud qui permet de conserver une fluidité suffisante de l'enrobé pour réaliser correctement ces opérations.

Ces deux procédés d'enrobage à chaud, utilisant des centrales continues ou discontinues, sont les plus employés si l'on considère le tonnage de bitume consommé à l'échelle mondiale, que ce soit en construction routière, en entretien routier ou dans le domaine de l'étanchéité. Ils font référence dans l'état actuel de l'art. Ce sont en effet les deux procédés les plus robustes à l'échelle industrielle.

Comme pour toutes les techniques présentées ici, il est nécessaire de contrôler précisément la granulométrie des granulats, la qualité du bitume qui doit respecter des normes déterminées par pays, et la qualité du procédé représentée entre autres par la qualité du malaxage déterminée par la géométrie de la zone de malaxage, par l'énergie de malaxage, par les vitesses des parties mobiles ainsi que par les différents temps du procédé.

Peu de paramètres spécifiques doivent être contrôlés en plus pour assurer le bon déroulement des opérations et on constate que le comportement de l'enrobé reste assez stable en présence de fluctuations. Le simple contrôle supplémentaire de la température des granulats et du bitume au moment de la production et de l'enrobé à l'épandage permet d'assurer un bon déroulement des opérations. Si l'on veut faire la comparaison, les techniques à température ambiante décrites plus haut nécessitent le contrôle supplémentaire de paramètres tels que le pH, la teneur en eau, la teneur et la nature chimique en additifs, la position d'ajout de ces additifs, la nature chimique du granulat et son âge parfois.

Cependant, les deux procédés de fabrication de mélanges bitumineux à température supérieure à 100°C décrits ci-dessus ne sont pas exempts de défauts :

- tous les bitumes ne donnent pas les mêmes performances aux enrobés produits : les deux grandes classes de bitume naphténique et non naphténique se distinguent, avec un avantage au bitume naphténique. Ce dernier donne, à températures de granulats et de bitume identiques ou proches, une meilleure fluidité au mélange avec les granulats. En pratique, cela se traduit également par une meilleure faculté de compactage et une meilleure cohésion. On constate également que l'on peut baisser la température du mélange des granulats et du bitume naphténique de 5 à 15°C par rapport au cas où l'on utilise du bitume non naphténique, tout en conservant une fluidité identique au mélange entre bitume non naphténique et granulats. Là aussi, il existe un besoin non satisfait d'améliorer les performances des mélanges de bitume non naphténique et de granulats ;

- le chauffage et le séchage des granulats conduisent à une consommation importante de combustible d'origine fossile, donc non renouvelable. Lorsqu'on analyse le procédé du point de vue thermique, on se rend compte que seul le bitume est initialement chaud à l'entrée de la centrale d'enrobage, les granulats, qui constituent en général 90 à 96% de la masse de l'enrobé, sont à température ambiante. On passe par la phase de chauffage temporaire des granulats de manière à assurer un enrobage de bonne qualité avec le bitume et de manière également à permettre une bonne mise en oeuvre. En revanche, le produit mis en place n'acquiert ses performances intéressantes qu'une fois refroidi. Toute l'énergie dépensée est finalement libérée dans l'atmosphère ;

- de manière concomitante, sont générées de grandes quantités de gaz à effet de serre (GES) et de poussières partiellement collectées et réinjectées dans le circuit d'enrobage. La mise en oeuvre elle-même conduit à l'émission de composés organiques volatils sur le site d'épandage, qui ont une action sur l'effet de serre. Il est possible d'associer des dispositifs de captage sur finisseur, mais cela nécessite le ré-équipement des ateliers de mise en oeuvre actuels et n'élimine pas les émissions en provenance du tapis posé en aval du finisseur et augmente le prix du produit final ;

- les conditions de travail sont difficiles à cause du rayonnement thermique et des émissions gazeuses ;
- lorsque, pour des raisons non maîtrisables comme une dégradation des conditions météorologiques, la venue de la nuit, l'allongement de la durée de transport de la centrale vers le chantier par exemple, la température du mélange bitumineux fabriqué préalablement baisse en dessous d'une certaine limite, celui-ci ne peut plus être mis en place correctement ce qui conduit à des défauts de porosité et de performances mécaniques. La robustesse du procédé est limitée. Pour éviter cela, il est courant de produire l'enrobé à des températures supérieures à celles préconisées dans les textes officiels (normes), ce qui revient à renforcer les trois premiers défauts cités.

Afin de diminuer l'amplitude des quatre derniers défauts cités ci-dessus (température élevée pour le séchage des granulats, GES, importance du rayonnement thermique et des émissions gazeuses, conditions de mise en oeuvre peu maîtrisables), l'homme du métier pourrait être amené à envisager de diminuer la température de fabrication du mélange bitumineux par rapport aux températures limites réglementées, c'est-à-dire en chauffant les granulats à moins haute température, tout en essayant de modifier le moins possible le procédé de fabrication de l'enrobé par rapport aux procédés à température supérieure à 100°C, et ce, notamment dans le but de minimiser les coûts. Il en résulterait alors une diminution de la température de mise en oeuvre par rapport aux températures limites réglementées.

Or, une température du mélange entre produit bitumineux et granulats inférieure aux normes ou règlements en vigueur, et surtout inférieure aux températures habituellement utilisées, entraînerait, sans autre modification, un défaut d'enrobage des granulats moins chauds par le produit bitumineux et, lors de la mise en oeuvre, un problème de fluidité du mélange, c'est-à-dire un manque de faculté de déformation de la masse du mélange. Ceci conduirait à un défaut d'alimentation du finisseur, à un défaut d'uni et de compacité. La compacité est communément mesurée par le pourcentage de vide à l'aide d'une sonde radioactive, par exemple selon la norme NF P98-241-1 de août 1993.

## Art antérieur

Le brevet US 5 820 663 revendique une composition contenant du bitume et un dope d'adhésivité qui est l'ester phosphorique d'un tensioactif alcool gras monohydrique de HLB comprise entre 8 et 18. La présence de ce dope d'adhésivité permet de limiter la séparation entre bitume et granulats en présence d'eau par rapport au cas sans additif dans le bitume. Les exemples sont des essais de laboratoire utilisés pour démontrer la performance de l'additif consistant en un test d'odeur du bitume additivé et un test de séparation entre bitume additivé et granulats en présence d'eau, après avoir mélangé granulats et bitume additivé à des températures supérieures à 135°C pour un bitume de pénétrabilité 85/100. Ces températures sont conformes aux normes en vigueur.

Le brevet US 6 024 788 revendique une composition contenant du bitume et un dope d'adhésivité qui est l'ester phosphorique d'un tensioactif alcool gras éthoxylé et/ou propoxylé, la chaîne grasse ayant certaines caractéristiques de structure et les motifs éthoxy et propoxy répétés un certain nombre de fois. Il est indiqué que cette composition présente une adhésivité améliorée sur les granulats, c'est-à-dire qu'elle réduit la séparation entre bitume additivé et granulats par rapport à des additifs de l'art antérieur. L'essai de laboratoire exemplifié pour montrer la performance de l'additif est un test de séparation entre bitume, additivé ou non, et granulats en présence d'eau, après avoir mélangé granulats et bitume à une température de 150°C. La pénétration du bitume n'est pas connue. Quelle que soit la pénétration du bitume entre 35/50 et 160/220, la température des granulats de 150°C utilisée pour l'enrobage est conforme aux normes. Pour un bitume de pénétration supérieure à 220, l'homme du métier sait que cela correspond à une température d'enrobage très élevée ; pour une pénétration inférieure à 35, il sait que cela correspond à une température trop basse pour assurer un bon enrobage lorsque le bitume n'est pas additivé, ce qui ne permet pas d'évaluer l'effet de l'eau sur la séparation granulats-bitume pur. Aussi ce test ne permet-il pas de mesurer l'effet du dope d'adhésivité lorsque la pénétration du bitume est inférieure à 35. Il n'y a pas de test pour étudier l'impact de l'additif sur la fluidité de l'enrobé.

Le brevet US 6 261 356 revendique le mélange de bitume, d'un alcool gras en $C_8$-$C_{22}$ oxypropylé et/ou oxyéthylé et phosphaté, et d'au moins un composant choisi parmi les huiles minérales, les alcools gras en $C_8$-$C_{18}$, les acides gras en $C_8$-$C_{18}$ et les triglycérides d'acides gras en $C_8$-$C_{18}$. Cette composition présente une adhésivité améliorée sur les granulats, c'est-à-dire qu'elle réduit la séparation entre bitume additivé et granulats par rapport aux additifs de l'art antérieur. Les inventeurs pensent que le dernier composant du mélange facilite l'orientation du produit phosphaté à l'interface bitume-granulats. L'essai de laboratoire utilisé pour démontrer la performance de l'additif est un test de séparation entre bitume additivé et granulats en présence d'eau, après avoir mélangé granulats et bitume additivé à une température de 150°C pour un bitume de pénétrabilité 60/80, c'est-à-dire une température conforme aux normes. Il n'y a pas de test pour étudier l'impact de l'additif sur la fluidité de l'enrobé.

Le brevet US 2 693 425 propose l'utilisation de produits phosphatés dans le bitume pour améliorer l'adhésion bitume-granulats. Les tests d'adhésion au laboratoire sont effectués avec un mélange entre granulats et bitume à 135°C, ce qui est conforme aux normes pour un bitume de pénétration 70/80. Il n'y a pas de test pour étudier l'impact de l'additif sur la fluidité de l'enrobé.

Le brevet EP-B1-0 792 918 propose l'utilisation d'un mélange de modificateur à base de caoutchouc ou de résine et d'un ester phosphaté d'alcool gras éthoxylé dans le bitume pour améliorer en autres l'adhésion bitume-granulats. Les tests de laboratoire pour évaluer l'adhésion du bitume sur les granulats sont effectués avec un mélange entre granulats et bitume produit à 180°C, ce qui est une température conforme aux pratiques. Il n'y a pas de test pour étudier l'impact de l'additif sur la fluidité de l'enrobé.

Le document EP 0 157 210 propose l'utilisation d'un additif organo-phosphoré acide possédant une fonction OH dans le bitume pour améliorer l'adhésion bitume-granulats. Les tests de laboratoire pour évaluer l'adhésion du bitume sur les granulats sont effectués avec un mélange entre granulats et bitume réalisé entre 150°C et 180°C pour des bitumes de pénétration 60/80 à 80/100, ce qui est une gamme de température conforme aux normes. Il n'y a pas de test pour étudier l'impact de l'additif sur la fluidité de l'enrobé.

Les documents de l'art antérieur cités précédemment utilisent des températures de procédé conformes aux normes en vigueur. Il est connu de l'homme de l'art qu'à ces températures le produit bitumineux voit sa pénétration baisser par suite de son étalement sous forme de films minces lors de la phase d'enrobage. Ainsi l'enrobé peut être caractérisé par la pénétration du produit bitumineux qu'il contient, une fois la production réalisée et l'enrobé transporté, posé, compacté et refroidi. Pour cela on réalise une extraction du produit bitumineux présent dans l'enrobé dans les 6 mois qui suivent la réalisation du chantier, selon la norme NF EN 12697-3 de janvier 2005. La pénétration du produit bitumineux obtenu après extraction, mesurée selon la norme NF EN 1426, est exprimée en dixièmes de millimètres. Cette pénétration peut alors être comparée à la pénétration initiale mesurée sur le produit bitumineux stocké avant mélange avec les granulats. On constate des baisses de pénétrations généralement comprises entre

- 5 et 20 pour un bitume de pénétration initiale comprise entre 20 et 30,
- entre 15 et 25 pour un bitume de pénétration initiale comprise entre 35 et 50,
- entre 20 et 35 pour un bitume de pénétration initiale comprise entre 50 et 70,
- entre 25 et 55 pour un bitume de pénétration initiale comprise entre 70 et 100, et
- entre 50 et 140 pour un bitume de pénétration initiale comprise entre 160 et 220.

Des solutions ont été proposées dans la littérature pour réduire les quatre derniers défauts cités ci-dessus des procédés d'enrobage à température supérieure à 100°C.

Certaines de ces solutions concernent des procédés dont les températures de production restent supérieures à 100°C, mais on trouve des solutions techniques qui consistent à diminuer la température de fabrication de l'enrobé en dessous de 100°C, comme indiqué ci-après.

Dans US 6 588 974, des paraffines sont ajoutées au bitume de manière à obtenir une viscosité du bitume acceptable pour l'enrobage à plus basse température, la réduction de température annoncée étant de l'ordre de 30°C. Les paraffines utilisées jouent le rôle de fluidifiant du bitume. À température constante, cela permet d'améliorer le compactage. En même temps, elles permettent une amélioration de certaines propriétés mécaniques du mélange entre granulats et produit bitumineux, comme la résistance à l'orniérage. Cependant, l'ajout des paraffines conduit à un changement de classe de bitume et peut conduire au dépassement du seuil normalisé de teneur en paraffines des bitumes. De manière concomitante, il existe un fort risque de dégradation du comportement à froid de l'enrobé, par augmentation de sa fragilité, c'est-à-dire par baisse de l'énergie de fracture lors d'un retrait empêché et par augmentation de la température de fracture. De plus, si la température de compactage est inférieure à la température de cristallisation des paraffines au sein du bitume, le compactage est beaucoup moins efficace.

Le brevet US 4 371 400 décrit l'utilisation d'une zéolite pour améliorer la fluidité à chaud d'un enrobé bitumineux à très faible teneur en vide, tout en améliorant la résistance à l'enfoncement à 22°C et 40°C.

Dans les demandes US 2004/0033308 et US 2005/0076810, est décrite l'utilisation de zéolite, en particulier de zéolite A, dans la production d'enrobé à chaud, ce qui permet de réduire les températures d'au moins 30°C tout en conservant un comportement normal en aval de l'étape de malaxage en centrale. Cependant ce procédé n'est pas exempt de défauts : un tel procédé nécessite la présence d'un silo de stockage ainsi qu'un système d'ajout de la zéolite. De plus, l'utilisation de zéolite à un dosage d'au moins 0,2 % par rapport aux granulats tel que préconisé dans ces deux demandes de brevet représente un coût supplémentaire non négligeable.

Dans la demande internationale WO 2005/100480, est décrite l'utilisation combinée de zéolite et de cires dans la production d'asphaltes coulés à basse température. Le procédé décrit présente non seulement l'inconvénient de la manipulation et du surcoût dû à l'utilisation de zéolite mais aussi de cires.

La demande internationale WO 97/20890 décrit un procédé de fabrication d'enrobés bitumineux pour lequel le mélange est effectué en deux temps. Dans un premier temps, les granulats sont enrobés avec un bitume très mou anhydre, la température du mélange obtenu étant comprise entre 80°C et 115°C ; dans un deuxième temps, de la poudre de bitume dur est ajoutée à une température inférieure à 50°C. Outre les modifications nécessaires à apporter aux installations industrielles existantes pour pouvoir manipuler et ajouter la poudre de bitume, ce procédé a l'inconvénient de nécessiter du temps pour obtenir une bonne cohésion.

Dans le brevet EP-B1-1 263 885, dans un premier temps, les granulats à 130°C sont enrobés avec un liant mou anhydre à 120°C, puis on ajoute, sous forme de mousse, du bitume dur et de la vapeur d'eau dans le malaxeur. L'enrobé obtenu est ensuite mis en oeuvre entre 70°C et 100°C. Ce procédé nécessite également du temps pour obtenir une bonne cohésion. De plus la pénétration résiduelle obtenue après mélange entre les deux bitumes rend ce procédé inadéquat pour les pays tempérés ou chauds.

Dans la demande de brevet EP-A1-1 469 038, les températures des différentes fractions granulaires injectées dans le malaxeur peuvent être différentes : dans un premier temps, les gros granulats sont enrobés avec la totalité du bitume à une température supérieure à 130°C, puis on injecte du sable humide non chauffé dans la centrale de malaxage, ce qui a l'avantage de limiter la consommation d'énergie. Au cours de la vaporisation de l'eau, on assure l'enrobage des éléments fins et de l'eau reste présente au sein de l'enrobé. L'enrobé se situe en sortie de centrale de malaxage à une température comprise entre 60°C et 100°C. Une variante proposée consiste à chauffer à 200°C les gros granulats puis à les enrober avec la totalité du bitume et à injecter le sable humide non chauffé. Dans ce cas, l'eau est complètement éliminée et l'enrobage du sable est assuré par sa vaporisation. Dans la première variante, on cherche à maîtriser l'enrobage du sable par la vaporisation de son eau à l'état liquide initialement, ce qui a l'inconvénient d'être un phénomène fortement dépendant de la teneur en eau. De plus la fluidité de l'enrobé ainsi produit est moins bonne que celle d'un enrobé à chaud de référence. Dans la seconde variante, on ne chauffe pas le sable, mais on le sèche au sein de la centrale de malaxage, par transfert de chaleur présente préalablement dans les gros granulats. À température constante d'enrobé en sortie de centrale, la quantité de chaleur nécessaire à l'obtention d'un enrobé anhydre selon cette demande de brevet est donc très proche de celle nécessaire à l'obtention d'un enrobé de référence.

La demande EP-A1-1 712 680 décrit un procédé consistant à enrober une première partie du granulat séchée et possédant des fines avec le liant puis à y ajouter la seconde partie du granulat possédant son humidité initiale. La fluidité de l'enrobé produit n'est pas au niveau de celle de l'enrobé à chaud et un aménagement sur la centrale de production est nécessaire.

Dans EP 1 323 867, on facilite l'enrobage de granulats froids par du bitume chaud en pré-traitant les granulats avec une émulsion aqueuse de fluxant et de dope d'adhésivité et en fluxant le bitume. L'utilisation de fluxant pose le problème de la cinétique de montée en cohésion qui est plus lente que celle obtenue par refroidissement dans le cadre d'une fabrication selon les procédés de référence.

On constate ainsi que les solutions proposées ci-dessus pour réduire la température de fabrication dans les procédés de fabrication à chaud présentent au moins l'un des inconvénients suivants pour pouvoir fonctionner efficacement :

- nécessité d'adapter et modifier fortement l'unité industrielle de production,
- et/ou perte de certaines des propriétés finales de l'enrobé telles que robustesse, fluidité, cohésion, augmentation de la fragilité à froid.

Exposé de l'invention

La présente invention propose un procédé de préparation d'enrobés obtenus à partir de mélange de produit bitumineux avec des granulats ; ces enrobés sont utilisables notamment pour la réalisation de matériaux dans le domaine de l'étanchéité, de la construction et de l'entretien de tapis routiers, trottoirs, pistes cyclables, aires de stationnement, pistes d'aviation...

L'enrobé bitumineux comprend au moins du granulat, au moins un produit bitumineux et au moins un additif B et est caractérisé en ce que :

➢ l'additif B contient au moins un composé (B1) de formule :

$$(R\text{-}O\text{-}A\text{-})_c\text{-}P(=O)\text{-}OH_d \qquad (B1)$$

où P est l'atome de phosphore, c est compris entre 1 et 2, c + d est égal à 3, A représente une liaison ou un groupement divalent comprenant au moins un motif propylène-oxy (OP) et/ou au moins un motif éthylène-oxy (OE) ; et
R représente une chaîne hydrocarbonée possédant de 1 à 30 atomes de carbone, la chaîne pouvant être linéaire, ramifiée, saturée, insaturée, la chaîne pouvant contenir au moins un cycle aromatique ou non, et le dosage en additif(s) B1, ramené à la tonne de produit bitumineux étant compris entre 0,3 kg et 20 kg ;

➢ l'additif B contient éventuellement, mais le plus souvent, de l'acide phosphorique, le dosage en acide phosphorique ramené à la tonne de produit bitumineux étant inférieur à 2 kg ;

➢ l'additif B contient éventuellement, mais le plus souvent, au moins un pyrophosphate du composé B1, à un dosage ramené à la tonne de produit bitumineux étant inférieure à 20 kg ; et

➢ le produit bitumineux présente un écart entre pénétration avant contact avec les granulats et pénétration après extraction de l'enrobé inférieur à 5 dixièmes de millimètres pour un bitume de pénétration initiale comprise entre 20 et 30 dixièmes de millimètres, inférieur à 15 dixièmes de millimètres pour un bitume de pénétration initiale comprise entre 35 et 50 dixièmes de millimètres, inférieur à 20 dixièmes de millimètres pour un bitume de pénétration initiale comprise entre 50 et 70 dixièmes de millimètres, inférieur à 25 dixièmes de millimètres pour un bitume de pénétration initiale comprise entre 70 dixièmes de millimètres et 100 dixièmes de millimètres, inférieur à 50 dixièmes de millimètres pour un bitume de pénétration initiale comprise entre 160 et 220 dixièmes de millimètres.

Selon un mode de réalisation préféré, A représente un groupement divalent comprenant des motifs propylène-oxy (OP) et/ou des motifs éthylène-oxy (OE), lesdits motifs OP/OE étant généralement répartis de manière statistique ou par blocs, de préférence par blocs.

Selon un autre mode de réalisation préféré, A représente un groupement divalent comprenant des motifs propylène-oxy (OP) et/ou des motifs éthylène-oxy (OE), lesdits motifs OP et/ou OE étant reliés à l'atome de phosphore par une liaison simple, ou par une chaîne hydrocarbonée comportant de préférence un, deux ou trois atomes de carbone, en chaîne linéaire ou ramifiée.

Selon encore un autre mode de réalisation préféré, les motifs OP et/ou OE sont directement liés à l'atome de phosphore (liaison simple), l'atome d'oxygène d'un motif OP ou OE étant lié à l'atome de phosphore.

De préférence A représente le motif $-(CH_2CH(CH_3)O)_a-(CH_2CH_2O)_b-$, dans lequel b est compris entre 0 et 10 (bornes incluses), et a est compris entre 0 et 80, de préférence entre 8 et 80, de préférence encore entre 20 et 60. Dans ce cas, le composé B1 peut s'écrire

$$(R-O-(CH_2CH(CH_3)O)_a-(CH_2CH_2O)_b-)_c-P(=O)-OH_d$$

où R, a, b, c et d sont tels que définis ci-dessus.

En variante, lorsque les groupements OP et/ou OE sont liés à l'atome de phosphore par une chaîne hydrocarbonée, le composé B1 peut avantageusement répondre à la formule suivante :

$$(R-(O-CH(CH_3)CH_2)_a-(OCH_2CH_2)_b-)_c-P(=O)-OH_d$$

où R, a, b, c et d sont tels que définis ci-dessus.

Dans un autre mode de réalisation préféré, a représente 0 lorsque R contient au moins 10 atomes de carbone, et a est compris entre 8 et 80, de préférence encore entre 20 et 60, lorsque R contient moins de 10 atomes de carbone.

Selon un autre mode de réalisation, A dans le composé de formule B1 représente une liaison simple. Le composé B1 peut alors s'écrire :

$$(R-O-)_c-P(=O)-OH_d$$

où R, c et d sont tels que définis ci-dessus.

Les composés de formule B1 sont soit disponibles dans le commerce, soit préparés selon des modes opératoires connus, ou encore en adaptant des modes opératoires connus, lesdits modes opératoires étant disponibles dans la littérature et les articles scientifiques, la littérature brevets, les « Chemical Abstracts », les bases de données informatiques, ou encore depuis Internet.

À titre d'exemple, et de manière non limitative, un procédé de préparation d'un composé B1 tel que précédemment défini consiste en la polymérisation par addition d'oxyde de propylène et/ou d'oxyde d'éthylène sur un alcool de formule R-OH, où R est tel que défini précédemment, suivie de la réaction avec $P_2O_5$. La structure des parties polypropylène glycol et polyéthylène glycol peut être statistique ou à blocs, et dans ce dernier cas l'ordre des blocs n'est pas limité.

Certains des composés de formule B1 sont connus et disponibles dans le commerce sous les dénominations Beycostat® (commercialisés par la société CECA S.A.).

La présente invention concerne également les composés de formule B1 décrite ci-dessus préparés à partir de matières premières d'origine renouvelable, c'est-à-dire à partir de matières premières d'origine non fossile.

Plus précisément, par matières premières d'origine renouvelable, on entend les matières premières qui comprennent au moins un atome de carbone, de préférence plusieurs, de préférence encore tous les atomes de carbone, d'origine renouvelable.

À la différence des matériaux issus de matières fossiles, les matériaux composés de matières premières d'origine renouvelable contiennent l'isotope 14 du carbone ($^{14}C$). Tous les échantillons de carbone tirés d'organismes vivants (animaux ou végétaux) sont en fait un mélange de 3 isotopes : $^{12}C$ (représentant environ 98,892%), $^{13}C$ (environ 1,108%) et $^{14}C$ (traces: environ $1,2.10^{-12}$%). Le rapport $^{14}C/^{12}C$ des tissus vivants est identique à celui de l'atmosphère. Dans l'environnement, le $^{14}C$ existe sous deux formes prépondérantes : sous forme minérale c'est-à-dire de gaz carbonique ($CO_2$) et sous forme organique c'est à dire de carbone intégré dans des molécules organiques.

Dans un organisme vivant, le rapport $^{14}C/^{12}C$ est maintenu constant par le métabolisme car le carbone est continuellement échangé avec l'environnement. La proportion de $^{14}C$ étant constante dans l'atmosphère, il en est de même dans l'organisme, tant qu'il est vivant, puisqu'il absorbe ce $^{14}C$ comme il absorbe le $^{12}C$. La proportion de $^{14}C$ et de $^{12}C$ n'a pas changé de manière significative au cours des derniers milliers d'années et le rapport moyen de $^{14}C/^{12}C$ est égal à environ $1,2 \times 10^{-12}$.

Le $^{12}C$ est stable, c'est-à-dire que le nombre d'atomes de $^{12}C$ dans un échantillon donné est constant au cours du temps. Le $^{14}C$, lui, est radioactif (chaque gramme de carbone d'être vivant contient suffisamment d'isotope $^{14}C$ pour donner 13,6 désintégrations par minute) et le nombre de tels atomes dans un échantillon décroît au cours du temps (t) selon la loi :

$$n = no^{(-at)}$$

dans laquelle:

- no est le nombre de $^{14}C$ à l'origine (à la mort de la créature, animal ou plante),
- n est le nombre d'atomes $^{14}C$ restant au bout du temps t,
- a est la constante de désintégration (ou constante radioactive) ; elle est reliée à la demi-vie.

La demi-vie (ou période), est la durée au bout de laquelle un nombre quelconque de noyaux radioactifs ou de particules instables d'une espèce donnée, est réduit de moitié par désintégration ; la demi-vie $T_{1/2}$ est reliée à la constante de désintégration a par la formule $aT_{1/2}= \ln 2$. La demi-vie du $^{14}C$ vaut environ 5730 ans.

Compte tenu de la demi-vie ($T_{1/2}$) du $^{14}C$, on considère que la teneur en $^{14}C$ est constante depuis l'extraction des matières premières d'origine renouvelable jusqu'à la synthèse du composé de formule B1, et même jusqu'à la fin de son utilisation.

Dans le cadre de la présente invention, Les composés de formule B1 peuvent aisément être obtenus à partir de matières premières d'origine renouvelable. Plus précisément, le groupement A peut par exemple être préparé à partir d'époxyde d'éthylène et/ou de propylène provenant d'éthylène et/ou de propylène d'origine végétale ou animale (par fermentation, déshydratation d'alcools de végétaux, et autres). Le groupement R peut provenir d'alcools issus du domaine végétal ou animal par fermentation, réduction d'acides gras présents dans les végétaux ou les graisses végétales, et autres.

Ainsi, les composés de formule B1 selon la présente invention, lorsqu'ils sont préparés en totalité ou en partie à partir de matières premières d'origine renouvelable, se caractérisent par le fait qu'ils contiennent une quantité d'isotope 14 du carbone supérieure à celle des mêmes composés de formule B1 préparés exclusivement à partir de matières premières d'origine fossile.

À l'heure actuelle, il existe au moins deux techniques différentes pour la mesure de la teneur en $^{14}C$ d'un échantillon :

- par spectrométrie à scintillation liquide : Cette méthode consiste à compter des particules 'bêta' ($\beta$) issues de la désintégration du $^{14}C$ ; on mesure le rayonnement 'bêta' issu d'un échantillon de masse connue (nombre d'atomes $^{12}C$ connu) pendant un certain temps ; cette 'radioactivité' est proportionnelle au nombre d'atomes de $^{14}C$, que l'on peut ainsi déterminer ; le $^{14}C$ présent dans l'échantillon émet des rayonnements $\beta-$, qui, au contact d'un liquide scintillant (scintillateur), donnent naissance à des photons ; ces photons ont des énergies différentes (comprises entre 0 keV et 156 keV) et forment ce que l'on appelle un spectre de $^{14}C$ ; selon deux variantes de cette méthode, l'analyse porte soit sur le dioxyde de carbone préalablement produit par l'échantillon carboné dans une solution absorbante appropriée, soit sur le benzène après conversion préalable de l'échantillon carboné en benzène ;
- par spectrométrie de masse : l'échantillon est réduit en graphite ou en dioxyde de carbone gazeux, analysé dans un spectromètre de masse ; cette technique utilise un accélérateur et un spectromètre de masse pour séparer les ions $^{14}C$ des $^{12}C$ et donc déterminer le rapport des deux isotopes.

Toutes ces méthodes de mesure de la teneur en $^{14}C$ de composés sont décrites précisément dans la norme ASTM D 6866 (notamment ASTM D 6866-06 de janvier 2006) et dans la norme ASTM D 7026 (notamment ASTM D 7026-04). La méthode de mesure préférentiellement utilisée dans le cas des composés de formule B1 de l'invention est la spectrométrie de masse décrite dans la norme ASTM D 6866-06 (« Radiocarbon and Isotope Ratio Mass Spectroscopy Analysis »).

Les composés de formule B1 préparés à partir d'au moins une matière première d'origine renouvelable sont nouveaux et à ce titre font également partie de la présente invention. Ces composés se caractérisent par une teneur en $^{14}C$ non nulle, plus précisément un ratio $^{14}C/^{12}C$ strictement supérieur à 0 et inférieur ou égal à environ $1,2 \times 10^{-12}$, la valeur 0 indiquant un composé B1 obtenu exclusivement à partir de carbone d'origine renouvelable, la valeur $1,2 \times 10^{-12}$ indiquant un composé B1 préparé exclusivement à partir de carbone d'origine renouvelable.

La présente invention concerne également le procédé de préparation d'enrobé bitumineux de la présente invention qui comprend le mélange physique de granulats avec au moins un produit bitumineux et au moins un additif B tel que défini précédemment.

Selon une variante du procédé de l'invention, une possibilité consiste à mélanger le produit bitumineux comprenant au moins un additif B avec les granulats. Selon une autre variante, il est possible de mélanger le produit bitumineux avec les granulats, puis de mélanger au moins un additif B avec le pré-mélange (granulats/produit bitumineux). Selon une troisième variante, il est possible de mélanger, de préférence pulvériser au moins un additif B sur les granulats, puis les mélanger avec au moins un produit bitumineux.

Dans chacune des variantes les mélanges des divers ingrédients entre eux peuvent être effectués selon tout procédé connu de l'homme du métier, par exemple, mélangeage, malaxage, pulvérisation, et autres.

Le procédé de préparation selon l'invention se caractérise notamment par le fait que les enrobés contenant au moins un additif B peuvent être obtenus à des températures inférieures à celles nécessaires à la préparation d'enrobés conventionnels, et en particulier :

> le mélange entre granulats et produit bitumineux est effectué à des températures des fractions granulaires qui peuvent être différentes ou identiques, permettant la production d'un enrobé à une température comprise entre 60°C et 200°C, et préférentiellement entre 100°C et 200°C ; par rapport à l'état de la technique, en sortie de centrale de production, la température des mélanges de granulats-produit bitumineux peut être abaissée (réduite) de manière surprenante d'une amplitude allant jusqu'à 50°C, de préférence de 20°C à 50°C ;

> la température du mélange entre granulats et produit bitumineux lors de l'épandage est abaissée de manière surprenante d'une amplitude de 5°C à 50°C ; et

> la température du mélange entre granulats et produit bitumineux au coeur du tapis en début de compactage, quand il a lieu, est abaissée de manière surprenante d'une amplitude de 10°C à 50°C, sans dégrader les propriétés normalisées du produit bitumineux et du mélange entre produit bitumineux et granulats, tout en conservant une conduite du procédé, depuis le transport jusqu'au compactage éventuel conforme à l'état de l'art, en dehors des considérations sur les températures ci-dessus décrites ; aux USA, pour les enrobés à chaud (Hot Mix Asphalt), la référence est la norme AASHTO PP28. Elle indique, en fonction de la viscosité du produit bitumineux, la gamme de température de mélange entre granulat et produit bitumineux ; la norme AASHTO PP28 indique, en fonction de la viscosité du produit bitumineux, la gamme de température des mélanges entre granulat et produit bitumineux pour le compactage; en France, la norme française NF P 98-150 de décembre 1992 constitue la référence sur l'exécution des corps de chaussées, couches de liaison et couche de roulement en enrobés hydrocarbonés, la norme française NF P 98-130 de novembre 1999 constitue la référence pour les bétons bitumineux semi-grenus et la norme française NF P 98-138 de novembre 1999 constitue la référence pour les graves bitumes ; à titre d'exemple pour un bitume de pénétration 35/50, ces normes indiquent que les températures limites acceptables sont de 150°C à 170°C pour l'enrobage et que, pour l'épandage, la température minimale de l'enrobé est de 130°C.

Comme indiqué précédemment, le ou les additifs B peuvent être ajoutés dans le produit bitumineux en amont de la zone de mélange entre granulats et produit bitumineux, ou pulvérisés sur les granulats chauffés, avant et/ou pendant l'ajout du produit bitumineux. Cette pulvérisation est effectuée de manière à assurer une bonne répartition du ou des additifs sur les granulats.

Lors du mélange produit bitumineux-granulats, la température du produit bitumineux est comprise entre 100°C et 250°C. Ces températures dépendent d'une part de la classe de pénétration du produit bitumineux : plus celle-ci est basse et plus le produit bitumineux et les granulats doivent être chauds. Ces températures dépendent d'autre part de la température de ramollissement bille-anneau du produit bitumineux : plus celle-ci est élevée et plus le produit bitumineux et les granulats doivent être chauds. Le produit bitumineux mis en oeuvre dans le procédé objet de la présente invention est utilisé à une température conforme à l'état de l'art.

Dans le cadre de la présente invention, les additifs B cités ci-dessus peuvent être utilisés purs ou dilués à l'aide de solvants carbonés comme les solvants pétroliers et/ou les huiles végétales lors de leur mélange avec les produits bitumineux.

Dans le cadre de la présente invention, le produit bitumineux peut, outre du bitume, contenir un ou plusieurs polymères ou copolymères tels que par exemple les poly(styrène-butadiène), poly(styrène-isoprène), polybutadiène, polychloroprène, polyisoprène, poly(éthylène-acétate de vinyle), poly(oléfine-acrylate d'alkyle) comme par exemple les poly(éthylène-acrylate d'alkyle), poly(oléfine-méthacrylate d'alkyle) comme par exemple les poly(éthylène-méthacrylate d'alkyle), poly(éthylène-acide acrylique), polyoléfines, polyesters, poudrettes de caoutchouc, ainsi qu'un ou plusieurs agents de réticulation permettant d'augmenter la stabilité au stockage du mélange entre bitume et polymère tels que par exemple le soufre.

Le ou les polymères, lorsqu'ils sont présents, sont en général ajoutés à raison de 1% à 10% en poids par rapport au poids de bitume.

De manière préférée, le procédé de préparation des enrobés selon l'invention est mis en oeuvre selon les conditions opératoires détaillées ci-dessous, étant entendu que les plages de température s'entendent au sens large (bornes incluses) :

> pour un bitume pur (i. e. sans ajout de polymère(s)) de pénétration comprise entre 10 et 20 :

- la température des granulats lors du malaxage avec le bitume est supérieure à 130°C, de préférence comprise entre 130 et 150°C,
- la température du mélange entre granulats et produit bitumineux lors de l'épandage est comprise entre 120 et 150°C,
- la température du mélange entre granulats et produit bitumineux au coeur du tapis en début de compactage, quand il a lieu, est comprise entre 120 et 150°C ;

> pour un bitume pur de pénétration comprise entre 20 et 35 :

- la température des granulats lors du malaxage avec le bitume est supérieure à 120°C, de préférence comprise entre 120 et 150 °C,
- la température du mélange entre granulats et produit bitumineux lors de l'épandage est comprise entre 110 et 135°C,
- la température du mélange entre granulats et produit bitumineux au coeur du tapis en début de compactage, quand il a lieu, est comprise entre 110°C et 135°C ;

> pour un bitume pur de pénétration comprise entre 35 et 50 :

- la température des granulats lors du malaxage avec le bitume est supérieure à 110°C, de préférence comprise entre 110°C et 140 °C,
- la température du mélange entre granulats et produit bitumineux lors de l'épandage est comprise entre 95°C et 125°C,
- la température du mélange entre granulats et produit bitumineux au coeur du tapis en début de compactage, quand il a lieu, est comprise entre 95°C et 125°C ;

> pour un bitume pur de pénétration comprise entre 50 et 70 :

- la température des granulats lors du malaxage avec le bitume est supérieure à 105°C, de préférence comprise entre 105°C et 135°C,
- la température du mélange entre granulats et produit bitumineux lors de l'épandage est comprise entre 90°C et 120°C,
- la température du mélange entre granulats et produit bitumineux au coeur du tapis en début de compactage, quand il a lieu, est comprise entre 85°C et 120°C ;

> pour un bitume pur de pénétration comprise entre 70 et 100 :

- la température des granulats lors du malaxage avec le bitume est supérieure à 100°C, de préférence comprise entre 100°C et 125°C,
- la température du mélange entre granulats et produit bitumineux lors de l'épandage est comprise entre 85°C et 115°C,
- la température du mélange entre granulats et produit bitumineux au coeur du tapis en début de compactage, quand il a lieu, est comprise entre 85°C et 115°C,

➢ pour un bitume pur de pénétration comprise entre 100 et 160 :

▪ la température des granulats lors du malaxage avec le bitume est supérieure à 100°C, de préférence comprise entre 100°C et 125°C,
▪ la température du mélange entre granulats et produit bitumineux lors de l'épandage est comprise entre 80°C et 105°C,
▪ la température du mélange entre granulats et produit bitumineux au coeur du tapis en début de compactage, quand il a lieu, est comprise entre 80°C et 105°C ;

➢ pour un bitume pur de pénétration comprise entre 160 et 250 :

▪ la température des granulats lors du malaxage avec le bitume est supérieure à 100°C, de préférence comprise entre 100°C et 120°C,
▪ la température du mélange entre granulats et produit bitumineux lors de l'épandage est comprise entre 75°C et 100°C,
▪ la température du mélange entre granulats et produit bitumineux au coeur du tapis en début de compactage, quand il a lieu, est comprise entre 75°C et 100°C ;

➢ pour un bitume de pénétration comprise entre 10 et 20 avant ajout de polymère(s) et contenant entre 1 et 4% de polymère(s) :

▪ la température des granulats lors du malaxage avec le bitume est supérieure à 150°C, de préférence comprise entre 150°C et 180°C,
▪ la température du mélange entre granulats et produit bitumineux lors de l'épandage est comprise entre 145°C et 175°C,
▪ la température du mélange entre granulats et produit bitumineux au coeur du tapis en début de compactage, quand il a lieu, est comprise entre 145°C et 175°C ;

➢ pour un bitume de pénétration comprise entre 20 et 35 avant ajout de polymère(s) et contenant entre 1 et 4% de polymère(s) :

▪ la température des granulats lors du malaxage avec le bitume est supérieure à 140°C, de préférence comprise entre 140°C et 165°C,
▪ la température du mélange entre granulats et produit bitumineux lors de l'épandage est comprise entre 130°C et 160°C,
▪ la température du mélange entre granulats et produit bitumineux au coeur du tapis en début de compactage, quand il a lieu, est comprise entre 130°C et 160°C ;

➢ pour un bitume de pénétration comprise entre 35 et 50 avant ajout de polymère(s) et contenant entre 1 et 4% de polymère(s) :

▪ la température des granulats lors du malaxage avec le bitume est supérieure à 130°C, de préférence comprise entre 130°C et 155°C,
▪ la température du mélange entre granulats et produit bitumineux lors de l'épandage est comprise entre 120°C et 150°C,
▪ la température du mélange entre granulats et produit bitumineux au coeur du tapis en début de compactage, quand il a lieu, est comprise entre 120°C et 150°C ;

➢ pour un bitume de pénétration comprise entre 50 et 70 avant ajout de polymère(s) et contenant entre 1 et 4% de polymère(s) :

▪ la température des granulats lors du malaxage avec le bitume est supérieure à 120°C, de préférence comprise entre 120°C et 150°C,
▪ la température du mélange entre granulats et produit bitumineux lors de l'épandage est comprise entre 115°C et 140°C,
▪ la température du mélange entre granulats et produit bitumineux au coeur du tapis en début de compactage, quand il a lieu, est comprise entre 115°C et 140°C ;

➢ pour un bitume de pénétration comprise entre 70 et 100 avant ajout de polymère(s) et contenant entre 1 et 4% de polymère(s) :

■ la température des granulats lors du malaxage avec le bitume est supérieure à 120°C, de préférence comprise entre 120°C et 140°C,
■ la température du mélange entre granulats et produit bitumineux lors de l'épandage est comprise entre 110°C et 135°C,
■ la température du mélange entre granulats et produit bitumineux au coeur du tapis en début de compactage, quand il a lieu, est comprise entre 110°C et 135°C ;

➢ pour un bitume de pénétration comprise entre 100 et 160 avant ajout de polymère et contenant entre 1 et 4% de polymère(s) :

■ la température des granulats lors du malaxage avec le bitume est supérieure à 120°C, de préférence comprise entre 120°C et 140°C,
■ la température du mélange entre granulats et produit bitumineux lors de l'épandage est comprise entre 105°C et 130°C,
■ la température du mélange entre granulats et produit bitumineux au coeur du tapis en début de compactage, quand il a lieu, est comprise entre 105°C et 130°C ;

➢ pour un bitume pur de pénétration comprise entre 160 et 250 avant ajout de polymère(s) et contenant entre 1 et 4% de polymère(s) :

■ la température des granulats lors du malaxage avec le bitume est supérieure à 120°C, de préférence comprise entre 120°C et 140°C,
■ la température du mélange entre granulats et produit bitumineux lors de l'épandage est comprise entre 100°C et 125°C,
■ la température du mélange entre granulats et produit bitumineux au coeur du tapis en début de compactage, quand il a lieu, est comprise entre 100°C et 125°C ;

➢ pour un bitume de pénétration comprise entre 10 et 20 avant ajout de polymère(s) et contenant entre 4 et 8% de polymère(s) :

■ la température des granulats lors du malaxage avec le bitume est supérieure à 155°C, de préférence comprise entre 155°C et 185°C,
■ la température du mélange entre granulats et produit bitumineux lors de l'épandage est comprise entre 150°C et 180°C,
■ la température du mélange entre granulats et produit bitumineux au coeur du tapis en début de compactage, quand il a lieu, est comprise entre 150°C et 180°C ;

➢ pour un bitume de pénétration comprise entre 20 et 35 avant ajout de polymère(s) et contenant entre 4 et 8% de polymère(s) :

■ la température des granulats lors du malaxage avec le bitume est supérieure à 145°C, de préférence comprise entre 145°C et 170°C,
■ la température du mélange entre granulats et produit bitumineux lors de l'épandage est comprise entre 135°C et 165°C,
■ la température du mélange entre granulats et produit bitumineux au coeur du tapis en début de compactage, quand il a lieu, est comprise entre 135°C et 165°C ;

➢ pour un bitume de pénétration comprise entre 35 et 50 avant ajout de polymère(s) et contenant entre 4 et 8% de polymère(s) :

■ la température des granulats lors du malaxage avec le bitume est supérieure à 135°C, de préférence comprise entre 135°C et 160°C,
■ la température du mélange entre granulats et produit bitumineux lors de l'épandage est comprise entre 125°C et 155°C,
■ la température du mélange entre granulats et produit bitumineux au coeur du tapis en début de compactage, quand il a lieu, est comprise entre 125°C et 155°C ;

➢ pour un bitume de pénétration comprise entre 50 et 70 avant ajout de polymère(s) et contenant entre 4 et 8% de polymère(s) :

- la température des granulats lors du malaxage avec le bitume est supérieure à 130°C, de préférence comprise entre 130°C et 155°C,
- la température du mélange entre granulats et produit bitumineux lors de l'épandage est comprise entre 120°C et 145°C,
- la température du mélange entre granulats et produit bitumineux au coeur du tapis en début de compactage, quand il a lieu, est comprise entre 120°C et 145°C ;

➢ pour un bitume de pénétration comprise entre 70 et 100 avant ajout de polymère(s) et contenant entre 4 et 8% de polymère(s) :

- la température des granulats lors du malaxage avec le bitume est supérieure à 125°C, de préférence comprise entre 125°C et 145°C,
- la température du mélange entre granulats et produit bitumineux lors de l'épandage est comprise entre 120°C et 140°C,
- la température du mélange entre granulats et produit bitumineux au coeur du tapis en début de compactage, quand il a lieu, est comprise entre 115°C et 140°C ;

➢ pour un bitume de pénétration comprise entre 100 et 160 avant ajout de polymère(s) et contenant entre 4 et 8% de polymère(s) :

- la température des granulats lors du malaxage avec le bitume est supérieure à 125°C, de préférence comprise entre 125°C et 145°C,
- la température du mélange entre granulats et produit bitumineux lors de l'épandage est comprise entre 115°C et 135°C,
- la température du mélange entre granulats et produit bitumineux au coeur du tapis en début de compactage, quand il a lieu, est comprise entre 110°C et 135°C ;

➢ pour un bitume pur de pénétration comprise entre 160 et 250 avant ajout de polymère(s) et contenant entre 4 et 8% de polymère(s) :

- la température des granulats lors du malaxage avec le bitume est supérieure à 125°C, de préférence comprise entre 125°C et 145°C,
- la température du mélange entre granulats et produit bitumineux lors de l'épandage est comprise entre 110°C et 130°C,
- la température du mélange entre granulats et produit bitumineux au coeur du tapis en début de compactage, quand il a lieu, est comprise entre 105°C et 130°C.

Les plages de températures indiquées ci-dessus se chevauchent lorsqu'on change de pénétration de bitume : généralement l'homme de l'art choisit les températures en se basant sur la classe du bitume utilisé et non sur la pénétration exacte du bitume utilisé. Cependant l'homme de l'art peut être amené à se demander quelle température choisir pour la production, l'épandage ou le compactage lors de l'utilisation d'un bitume dont la pénétration est exactement à la frontière entre deux classes. L'invention permet alors de choisir la gamme de température la plus basse. Par exemple, pour un bitume pur de pénétration 35, les deux plages de température sont les suivantes : 120-150°C et 110-140°C à la production en sortie de centrale. L'invention permet de choisir la plage de température la plus basse 110-140°C. Le choix plus précis de la température à l'intérieur de cette plage dépend des performances de la centrale, de la température et de la nature et du dosage du bitume utilisé, de la nature et distribution granulométrique des granulats, des conditions météorologiques lors du transport et du chantier, du temps de transport, des performances des équipements d'épandage et de compactage, et du niveau visé pour les propriétés de l'enrobé. Les performances de l'enrobé sont alors conformes aux normes, tout en conservant une conduite du procédé, depuis le transport jusqu'au compactage éventuel conforme à l'état de l'art, en dehors des considérations sur les températures ci-dessus décrites. Travailler dans la gamme de température supérieure 120-150°C facilitera les opérations tout en restant dans le cadre de l'invention.

De manière encore plus préférée, les conditions opératoires du procédé selon l'invention sont les suivantes :

➤ pour un bitume pur de pénétration comprise entre 10 et 20 :

- la température des granulats lors du malaxage avec le bitume est comprise entre 135°C et 150°C,
- la température du mélange entre granulats et produit bitumineux lors de l'épandage est comprise entre 125°C et 145°C,
- la température du mélange entre granulats et produit bitumineux au coeur du tapis en début de compactage, quand il a lieu, est comprise entre 125°C et 145°C ;

➤ pour un bitume pur de pénétration comprise entre 20 et 35 :

- la température des granulats lors du malaxage avec le bitume est comprise entre 125°C et 135°C,
- la température du mélange entre granulats et produit bitumineux lors de l'épandage est comprise entre 115°C et 125°C,
- la température du mélange entre granulats et produit bitumineux au coeur du tapis en début de compactage, quand il a lieu, est comprise entre 105°C et 125°C ;

➤ pour un bitume pur de pénétration comprise entre 35 et 50 :

- la température des granulats lors du malaxage avec le bitume est comprise entre 115°C et 125°C,
- la température du mélange entre granulats et produit bitumineux lors de l'épandage est comprise entre 105°C et 115°C,
- la température du mélange entre granulats et produit bitumineux au coeur du tapis en début de compactage, quand il a lieu, est comprise entre 95°C et 105°C ;

➤ pour un bitume pur de pénétration comprise entre 50 et 70 :

- la température des granulats lors du malaxage avec le bitume est comprise entre 105°C et 115°C,
- la température du mélange entre granulats et produit bitumineux lors de l'épandage est comprise entre 95°C et 105°C,
- la température du mélange entre granulats et produit bitumineux au coeur du tapis en début de compactage, quand il a lieu, est comprise entre 85°C et 95°C ;

➤ pour un bitume pur de pénétration comprise entre 70 et 100 :

- la température des granulats lors du malaxage avec le bitume est comprise entre 100°C et 105°C,
- la température du mélange entre granulats et produit bitumineux lors de l'épandage est comprise entre 85°C et 95°C,
- la température du mélange entre granulats et produit bitumineux au coeur du tapis en début de compactage, quand il a lieu, est comprise entre 85°C et 95°C ;

➤ pour un bitume pur de pénétration comprise entre 100 et 160 :

- la température des granulats lors du malaxage avec le bitume est comprise entre 100°C et 105°C,
- la température du mélange entre granulats et produit bitumineux lors de l'épandage est comprise entre 85°C et 95°C,
- la température du mélange entre granulats et produit bitumineux au coeur du tapis en début de compactage, quand il a lieu, est comprise entre 85°C et 95°C ;

➤ pour un bitume pur de pénétration comprise entre 160 et 250 :

- la température des granulats lors du malaxage avec le bitume est comprise entre 100°C et 105°C,
- la température du mélange entre granulats et produit bitumineux lors de l'épandage est comprise entre 80°C et 85°C,
- la température du mélange entre granulats et produit bitumineux au coeur du tapis en début de compactage, quand il a lieu, est comprise entre 80°C et 85°C ;

➤ pour un bitume de pénétration comprise entre 10 et 20 avant ajout de polymère(s) et contenant entre 1 et 4% de polymère(s) :

- la température des granulats lors du malaxage avec le bitume est comprise entre 150°C et 180°C,
- la température du mélange entre granulats et produit bitumineux lors de l'épandage est comprise entre 145°C et 175°C,
- la température du mélange entre granulats et produit bitumineux au coeur du tapis en début de compactage, quand il a lieu, est comprise entre 145°C et 175°C ;

➤ pour un bitume de pénétration comprise entre 20 et 35 avant ajout de polymère(s) et contenant entre 1 et 4% de polymère(s) :

- la température des granulats lors du malaxage avec le bitume est comprise entre 140°C et 150°C,
- la température du mélange entre granulats et produit bitumineux lors de l'épandage est comprise entre 130°C et 145°C,
- la température du mélange entre granulats et produit bitumineux au coeur du tapis en début de compactage, quand il a lieu, est comprise entre 130°C et 145°C ;

➤ pour un bitume de pénétration comprise entre 35 et 50 avant ajout de polymère(s) et contenant entre 1 et 4% de polymère(s) :

- la température des granulats lors du malaxage avec le bitume est comprise entre 130°C et 140°C,
- la température du mélange entre granulats et produit bitumineux lors de l'épandage est comprise entre 120°C et 130°C,
- la température du mélange entre granulats et produit bitumineux au coeur du tapis en début de compactage, quand il a lieu, est comprise entre 120°C et 130°C ;

➤ pour un bitume de pénétration comprise entre 50 et 70 avant ajout de polymère(s) et contenant entre 1 et 4% de polymère(s) :

- la température des granulats lors du malaxage avec le bitume est comprise entre 120°C et 130°C,
- la température du mélange entre granulats et produit bitumineux lors de l'épandage est comprise entre 115°C et 120°C,
- la température du mélange entre granulats et produit bitumineux au coeur du tapis en début de compactage, quand il a lieu, est comprise entre 110°C et 120°C ;

➤ pour un bitume de pénétration comprise entre 70 et 100 avant ajout de polymère(s) et contenant entre 1 et 4% de polymère(s) :

- la température des granulats lors du malaxage avec le bitume est comprise entre 120°C et 130°C,
- la température du mélange entre granulats et produit bitumineux lors de l'épandage est comprise entre 115°C et 120°C,
- la température du mélange entre granulats et produit bitumineux au coeur du tapis en début de compactage, quand il a lieu, est comprise entre 110°C et 120°C ;

➤ pour un bitume de pénétration comprise entre 100 et 160 avant ajout de polymère et contenant entre 1 et 4% de polymère(s) :

- la température des granulats lors du malaxage avec le bitume est comprise entre 120°C et 130°C,
- la température du mélange entre granulats et produit bitumineux lors de l'épandage est comprise entre 105°C et 115°C,
- la température du mélange entre granulats et produit bitumineux au coeur du tapis en début de compactage, quand il a lieu, est comprise entre 105°C et 110°C ;

➤ pour un bitume pur de pénétration comprise entre 160 et 250 avant ajout de polymère(s) et contenant entre 1 et 4% de polymère(s) :

- la température des granulats lors du malaxage avec le bitume est comprise entre 120°C et 130°C,

- la température du mélange entre granulats et produit bitumineux lors de l'épandage est comprise entre 105°C et 115°C,
- la température du mélange entre granulats et produit bitumineux au coeur du tapis en début de compactage, quand il a lieu, est comprise entre 100°C et 105°C ;

➢ pour un bitume de pénétration comprise entre 10 et 20 avant ajout de polymère(s) et contenant entre 4 et 8% de polymère(s) :

- la température des granulats lors du malaxage avec le bitume est comprise entre 165°C et 185°C,
- la température du mélange entre granulats et produit bitumineux lors de l'épandage est comprise entre 155°C et 180°C,
- la température du mélange entre granulats et produit bitumineux au coeur du tapis en début de compactage, quand il a lieu, est comprise entre 155°C et 180°C ;

➢ pour un bitume de pénétration comprise entre 20 et 35 avant ajout de polymère(s) et contenant entre 4 et 8% de polymère(s) :

- la température des granulats lors du malaxage avec le bitume est comprise entre 155°C et 165°C,
- la température du mélange entre granulats et produit bitumineux lors de l'épandage est comprise entre 145°C et 155°C,
- la température du mélange entre granulats et produit bitumineux au coeur du tapis en début de compactage, quand il a lieu, est comprise entre 145°C et 155°C ;

➢ pour un bitume de pénétration comprise entre 35 et 50 avant ajout de polymère(s) et contenant entre 4 et 8% de polymère(s) :

- la température des granulats lors du malaxage avec le bitume est comprise entre 145°C et 155°C,
- la température du mélange entre granulats et produit bitumineux lors de l'épandage est comprise entre 135°C et 145°C,
- la température du mélange entre granulats et produit bitumineux au coeur du tapis en début de compactage, quand il a lieu, est comprise entre 130°C et 145°C ;

➢ pour un bitume de pénétration comprise entre 50 et 70 avant ajout de polymère(s) et contenant entre 4 et 8% de polymère(s) :

- la température des granulats lors du malaxage avec le bitume est comprise entre 135°C et 145°C,
- la température du mélange entre granulats et produit bitumineux lors de l'épandage est comprise entre 125°C et 135°C,
- la température du mélange entre granulats et produit bitumineux au coeur du tapis en début de compactage, quand il a lieu, est comprise entre 125°C et 130°C ;

➢ pour un bitume de pénétration comprise entre 70 et 100 avant ajout de polymère(s) et contenant entre 4 et 8% de polymère(s) :

- la température des granulats lors du malaxage avec le bitume est comprise entre 125°C et 135°C,
- la température du mélange entre granulats et produit bitumineux lors de l'épandage est comprise entre 120°C et 125°C,
- la température du mélange entre granulats et produit bitumineux au coeur du tapis en début de compactage, quand il a lieu, est comprise entre 120°C et 125°C ;

➢ pour un bitume de pénétration comprise entre 100 et 160 avant ajout de polymère(s) et contenant entre 4 et 8% de polymère(s) :

- la température des granulats lors du malaxage avec le bitume est comprise entre 125°C et 135°C,
- la température du mélange entre granulats et produit bitumineux lors de l'épandage est comprise entre 115°C et 120°C,
- la température du mélange entre granulats et produit bitumineux au coeur du tapis en début de compactage, quand il a lieu, est comprise entre 115°C et 120°C ;

➢ pour un bitume pur de pénétration comprise entre 160 et 250 avant ajout de polymère(s) et contenant entre 4 et 8% de polymère(s) :

- la température des granulats lors du malaxage avec le bitume est comprise entre 125°C et 135°C,
- la température du mélange entre granulats et produit bitumineux lors de l'épandage est comprise entre 110°C et 115°C,
- la température du mélange entre granulats et produit bitumineux au coeur du tapis en début de compactage, quand il a lieu, est comprise entre 110°C et 115°C.

Les avantages de l'invention par rapport à l'état de l'art sont listés ci-dessous et incluent notamment la limitation des quatre défauts cités plus haut lors de la mise en oeuvre des procédés de fabrication d'enrobés à des températures supérieures à 100°C :

- diminution de la consommation de combustible fossile lorsqu'il y a diminution de la température de production du mélange de granulats et de produit bitumineux, par le chauffage des granulats à une moindre température,
- diminution de l'émission de GES et de poussières,
- diminution de la pénibilité des travaux lors des opérations de répandage et de compactage,
- sécurisation des opérations d'épandage et de compactage de l'enrobé vis-à-vis des conditions météorologiques, cette sécurisation étant en particulier possible pour des mélanges de granulats et de produits bitumineux dont la température en sortie de centrale de production est conforme aux normes et dont les températures d'épandage et de compactage sont abaissées par rapport aux normes,
- allongement du délai pendant lequel on peut utiliser l'enrobé après sa préparation,
- dans le cas où deux bandes d'enrobé sont déposées successivement et côte à côte, le joint les séparant est plus résistant et mieux fermé,
- le retrait thermique est plus limité ainsi que le risque de fissuration,
- l'oxydation du produit bitumineux est plus limitée, ceci conduisant à une différence de pénétration plus faible entre la pénétration mesurée sur le bitume initial et la pénétration mesurée sur le bitume extrait de l'enrobé, par rapport à la différence de pénétration mesurée sur un enrobé à chaud,
- la plus faible différence de pénétration augmente la durée de vie du mélange produit bitumineux/granulats,
- l'oxydation plus limitée du produit bitumineux exposée précédemment a pour autre avantage de faciliter le recyclage dudit produit bitumineux,
- abaissement des températures de production de l'enrobé par le chauffage des granulats à moindre température sans investissement nécessaire sur l'unité de production,
- durée entre début de l'épandage de l'enrobé et réouverture au trafic réduite,

- pas d'impact sur les propriétés mécaniques finales du matériau de construction bitumineux dans le sens que ces propriétés restent conformes aux normes en vigueur.

La présente invention concerne également l'utilisation des enrobés préparés selon le procédé défini plus haut, pour la réalisation de matériaux dans le domaine de l'étanchéité, la construction et l'entretien de tapis routiers, trottoirs, pistes cyclables, aires de jeux, aires de stationnement et pistes d'aviation.

Enfin, l'invention a pour autre objet les surfaces, tapis routiers, trottoirs, pistes cyclables, aires de jeux, aires de stationnement et pistes d'aviation, revêtus en totalité ou partie par au moins un enrobé tel défini dans la présente description.

L'invention est maintenant illustrée à l'aide des exemples de réalisation suivants, qui n'ont pas pour but d'en limiter la portée définie par les revendications années à la présente description.

### Exemples

Dans l'exemple 1, l'additivation du bitume de pénétration 35/50 est effectuée à 160°C, sur plaque chauffante avec agitation à 1 tr/s pendant 15 minutes.

Les mesures de pénétration (ou pénétrabilité) et de point de ramollissement bille-anneau des enrobés sont respectivement conformes aux normes NF EN 1426 et NF EN 1427.

### Exemple 1

Un bitume dénommé TOTAL Azalt de pénétration 35/50 provenant de la raffinerie de Feyzin (Rhône, France) a été additivé à l'aide des additifs suivants :

* Additif 1 : mélange de 93% en masse de produit $B1_A$ de formule chimique (R-O-$(CH_2CH(CH_3)O)_a$-$(CH_2CH_2O)_b)_c$-P(=O)-$OH_d$ avec P l'atome de phosphore, c compris entre 1 et 2, c+d égal à 3, a égal à 0, b égal à 4 et R représentant une chaîne hydrocarbonée linéaire possédant entre 12 et 14 atomes de carbone, de 3% en masse d'alcool ROH, de 2% en masse d'acide phosphorique, de 2% en masse de dérivés pyrophosphoriques du produit $B1_A$ ci-dessus, commercialisé sous le nom de Beycostat® A244 ;

* Additif 2 : mélange de 94% en masse de produit $B1_B$ de formule chimique (R-O-$(CH_2CH(CH_3)O)_a$-$(CH_2CH_2O)_b)_c$-P(=O)-$OH_d$ avec P l'atome de phosphore, c compris entre 1 et 2, c+d égal à 3, a égal à 0, b égal à 4 et R représentant une chaîne hydrocarbonée linéaire possédant entre 16 et 18 atomes de carbone, de 3% en masse d'alcool ROH, de 2% en masse d'acide phosphorique, de 1% en masse de dérivés pyrophosphoriques du produit $B1_B$ ci-dessus, commercialisé sous le nom de Beycostat® A684 ;

* Additif 3 : mélange de 97% en masse de produit $B1_C$ de formule chimique (R-O-$(CH_2CH(CH_3)O)_a$-$(CH_2CH_2O)_b)_c$-P(=O)-$OH_d$ avec P l'atome de phosphore, c compris entre 1 et 2, c+d égal à 3, a égal à 4, b égal à 2 et R représentant la chaîne hydrocarbonée nonylphénol, les proportions massiques du produit en monoester de phosphate et diester de phosphate étant comprises respectivement entre 50 à 65% et 30 à 40%, et de 3% en masse d'acide phosphorique ;

* Additif 4 : mélange de 98% en masse de produit $B1_D$ de formule chimique (R-O-$(CH_2CH(CH_3)O)_a$-$(CH_2CH_2O)_b)_c$-P(=O)-$OH_d$ avec P l'atome de phosphore, c compris entre 1 et 2, c+d égal à 3, a égal à 0, b égal à 0 et R représentant la chaîne hydrocarbonée nonylphénol, les proportions massiques du produit en monoester de phosphate et diester de phosphate étant comprises respectivement entre 50 à 65% et 30 à 40%, et de 3% en masse d'acide phosphorique.

Les mesures de pénétrabilité et de point de ramollissement bille-anneau sont réunies dans le tableau suivant :

| N° | Nature de l'échantillon | Pénétration ($\times$ 0,1 mm) à 25°C | Limites de pénétration ($\times$0,1 mm) | Point de ramollissement (°C) | Limites de point de ramollissement (°C) |
|---|---|---|---|---|---|
| 1 | Bitume pur | 37 | | 55 | |
| 2 | Bitume + Additif 1 (5 kg/t) | 37 | | 54 | |
| 3 | Bitume + Additif 2 (5 kg/t) | 36 | 35-50 | 55 | 50-58 |
| 4 | Bitume + Additif 3 (5 kg/t) | 39 | | 53 | |
| 5 | Bitume + Additif 4 (5 kg/t) | 41 | | 55 | |

On ne modifie pas la classe du bitume en ajoutant les additifs.

### Exemple 2

Un bitume commercialisé par REPSOL de pénétration 60/70 a été additivé avec l'additif 2 (selon exemple 1). La pénétration de ce bitume a été mesurée avant et après son utilisation dans la fabrication d'un enrobé BBSG. L'extraction du bitume a été réalisée selon la norme NF EN 12697-3. Les bitumes provenant d'un enrobé à chaud fabriqué selon la norme NF P 98-130 et d'un enrobé tiède ont été comparés. Les fabrications des enrobés ont été réalisées dans les conditions décrites sur le tableau suivant :

| N° | Nature de l'échantillon | Température granulats à la production (°C) | Température au compactage (°C) | Pénétration (×0,1 mm) à 25°C | Pénétration après extraction (×0,1 mm) à 25°C | Écart de pénétration (×0,1 mm) à 25°C |
|---|---|---|---|---|---|---|
| 1 | Bitume 60/70 | 150 | 140 | 61 | 40 | 21 |
| 2 | Bitume 60/70 + Additif 2 | 120 | 110 | 61 | 50 | 11 |

On peut observer la réduction de l'écart de pénétration des bitumes provenant des enrobés N°1 et N°2. En effet la pénétration a changé de 61 à 50, soit un écart de 11 pour l'enrobé tiède, grâce à l'utilisation de l'additif 2, alors que la pénétration a changé de 61 à 40, soit un écart de 21, pour l'enrobé à chaud.

**Exemple 3**

Sur une centrale fixe discontinue, on fabrique un Béton Bitumineux Semi-Grenu (BBSG) 0/10 de classe 3 en quatre planches différentes, toutes quatre possédant la formule granulaire suivante :

- filler calcaire      calcaire      3%
- sable 0/4            granite       44%
- granulats 4/6        granite       12%
- granulats 6/10       granite       41%

Le bitume utilisé est le même que celui de l'exemple 1 (TOTAL Azalt pénétration 35/50). La teneur en produit bitumineux est de 5,7 g pour 100 g de granulats. Pour les deux premières planches, le bitume est utilisé pur. Pour les quatre autres planches, le bitume est additivé avec les additifs suivants au dosage de 4 kg par tonne de bitume.

Les additifs 1 à 4 testés sont les mêmes que ceux décrits à l'exemple 1.

Chaque additivation est effectuée par le trou d'homme de la cuve de stockage du bitume dédiée. Le bitume ainsi additivé avec les additifs 1 et 2 est utilisé après 30 minutes de recirculation dans la cuve de stockage. Le bitume ainsi additivé avec les additifs 3 et 4 est utilisé après 2h30 minutes de recirculation dans la cuve de stockage.

Lors de la production de l'enrobé, les températures moyennes suivantes sont respectées :

- le granulat est chauffé à 160°C pour la première planche et 120°C pour les cinq planches suivantes ;
- le bitume est, dans tous les cas, utilisé à 160°C.

L'épandage est effectué à l'aide d'un finisseur Vogele 1900, dont la vitesse d'avancement est de 5 m/min et d'un compacteur Dynapac CC422, dont la vitesse d'avancement est de 3 km/h, le dosage en enrobé étant de 140 kg/m$^2$. Le nombre de passes réalisées est de 8, sous vibration de petite amplitude et de fréquence 50 Hz. Lors du compactage, les températures du BBSG suivantes sont respectées :

- sur bitume pur, à 140°C en moyenne pour la première,
- sur bitume pur ou additivé à 100°C pour les cinq autres planches.

On a donc fabriqué la première planche à des températures conformes à la norme française NF P 98-138 et les cinq autres planches à des températures abaissées de 40°C par rapport à la première planche. Il s'agit donc d'enrobés tièdes.

On mesure, suite au chantier, les masses volumiques apparentes au gamma-densimètre selon la norme NF P 98-241-1. Les porosités sont calculées à partir des masses volumiques gamma. Les températures (T) du BBSG sont mesurées à coeur. Les valeurs moyennes sont rassemblées dans le tableau suivant :

| Nature du bitume | T granulats à la production (°C) | T BBSG à la dépose (°C) | T BBSG au compactage (°C) | Porosité moyenne (%) |
|---|---|---|---|---|
| Bitume pur | 160 | 160 | 140 | 4,2 |

(suite)

| Nature du bitume | T granulats à la production (°C) | T BBSG à la dépose (°C) | T BBSG au compactage (°C) | Porosité moyenne (%) |
|---|---|---|---|---|
| Bitume pur | 120 | 120 | 100 | 8,5 |
| Bitume + Additif 1 (4kg/t) | 120 | 120 | 100 | 4,8 |
| Bitume + Additif 2 (4kg/t) | 120 | 120 | 100 | 5,9 |
| Bitume + Additif 3 (4kg/t) | 120 | 120 | 100 | 5,7 |
| Bitume + Additif 4 (4 kg/t) | 120 | 120 | 100 | 5,6 |

Par rapport aux limites de porosité de la norme NF P 98-130 pour les BBSG 0/10 de classe 3 qui sont de 4% et 8%, le BBSG de référence selon la norme française NF P 98-138 ainsi que les BBSG produits selon la présente demande à l'aide des additifs 1 à 4 respectent la norme NF P 98-130.

Le BBSG produit avec du bitume pur à 120°C est mal enrobé, des granulats apparaissant partiellement non recouverts de bitume, et la porosité est trop élevée. La fluidité des enrobés tièdes, mesurée par l'inverse de la porosité, est donc améliorée grâce aux additifs 1 à 4 et cette fluidité est acceptable par rapport à la norme.

## Revendications

1. Procédé de préparation d'un enrobé bitumineux comprenant au moins du granulat, au moins un produit bitumineux et au moins un additif B, **caractérisé en ce que** :

> l'additif B contient au moins un composé (B1) de formule :

$$(R-O-A-)_c-P(=O)-OH_d \qquad (B1)$$

où P est l'atome de phosphore, c est compris entre 1 et 2, c + d est égal à 3, A représente une liaison ou un groupement divalent comprenant au moins un motif propylène-oxy (OP) et/ou au moins un motif éthylène-oxy (OE) ; et

R représente une chaîne hydrocarbonée possédant de 1 à 30 atomes de carbone, la chaîne pouvant être linéaire, ramifiée, saturée, insaturée, la chaîne pouvant contenir au moins un cycle aromatique ou non, et le dosage en additif(s) B1, ramené à la tonne de produit bitumineux étant compris entre 0,3 kg et 20 kg ;

> l'additif B contient éventuellement, mais le plus souvent, de l'acide phosphorique, le dosage en acide phosphorique ramené à la tonne de produit bitumineux étant inférieur à 2 kg ;

> l'additif B contient éventuellement, mais le plus souvent, au moins un pyrophosphate du composé B1, à un dosage ramené à la tonne de produit bitumineux inférieur à 20 kg ; et

> le produit bitumineux présente un écart entre pénétration avant contact avec les granulats et pénétration après extraction de l'enrobé inférieur à 5 dixièmes de millimètres pour un bitume de pénétration initiale comprise entre 20 et 30 dixièmes de millimètres, inférieur à 15 dixièmes de millimètres pour un bitume de pénétration initiale comprise entre 35 et 50 dixièmes de millimètres, inférieur à 20 dixièmes de millimètres pour un bitume de pénétration initiale comprise entre 50 et 70 dixièmes de millimètres, inférieur à 25 dixièmes de millimètres pour un bitume de pénétration initiale comprise entre 70 dixièmes de millimètres et 100 dixièmes de millimètres, inférieur à 50 dixièmes de millimètres pour un bitume de pénétration initiale comprise entre 160 et 220 dixièmes de millimètres,

ledit procédé comprenant le mélange physique desdits granulats avec ledit au moins un produit bitumineux et ledit au moins un additif B, dans lequel :

➢ pour un bitume pur de pénétration comprise entre 10 et 20 :

- la température des granulats lors du malaxage avec le bitume est supérieure à 130°C,
- la température du mélange entre granulats et produit bitumineux lors de l'épandage est comprise entre 120 et 150°C,
- la température du mélange entre granulats et produit bitumineux au coeur du tapis en début de compactage, quand il a lieu, est comprise entre 120 et 150°C ;

➢ pour un bitume pur de pénétration comprise entre 20 et 35 :

- la température des granulats lors du malaxage avec le bitume est supérieure à 120°C,
- la température du mélange entre granulats et produit bitumineux lors de l'épandage est comprise entre 110 et 135°C,
- la température du mélange entre granulats et produit bitumineux au coeur du tapis en début de compactage, quand il a lieu, est comprise entre 110°C et 135°C ;

➢ pour un bitume pur de pénétration comprise entre 35 et 50 :

- la température des granulats lors du malaxage avec le bitume est supérieure à 110°C,
- la température du mélange entre granulats et produit bitumineux lors de l'épandage est comprise entre 95°C et 125°C,
- la température du mélange entre granulats et produit bitumineux au coeur du tapis en début de compactage, quand il a lieu, est comprise entre 95°C et 125°C ;

➢ pour un bitume pur de pénétration comprise entre 50 et 70 :

- la température des granulats lors du malaxage avec le bitume est supérieure à 105°C,
- la température du mélange entre granulats et produit bitumineux lors de l'épandage est comprise entre 90°C et 120°C,
- la température du mélange entre granulats et produit bitumineux au coeur du tapis en début de compactage, quand il a lieu, est comprise entre 85°C et 120°C ;

➢ pour un bitume pur de pénétration comprise entre 70 et 100 :

- la température des granulats lors du malaxage avec le bitume est supérieure à 100°C,
- la température du mélange entre granulats et produit bitumineux lors de l'épandage est comprise entre 85°C et 115°C,
- la température du mélange entre granulats et produit bitumineux au coeur du tapis en début de compactage, quand il a lieu, est comprise entre 85°C et 115°C,

➢ pour un bitume pur de pénétration comprise entre 100 et 160 :

- la température des granulats lors du malaxage avec le bitume est supérieure à 100°C,
- la température du mélange entre granulats et produit bitumineux lors de l'épandage est comprise entre 80°C et 105°C,
- la température du mélange entre granulats et produit bitumineux au coeur du tapis en début de compactage, quand il a lieu, est comprise entre 80°C et 105°C ;

➢ pour un bitume pur de pénétration comprise entre 160 et 250 :

- la température des granulats lors du malaxage avec le bitume est supérieure à 100°C,
- la température du mélange entre granulats et produit bitumineux lors de l'épandage est comprise entre 75°C et 100°C,
- la température du mélange entre granulats et produit bitumineux au coeur du tapis en début de compactage, quand il a lieu, est comprise entre 75°C et 100°C ;

➢ pour un bitume de pénétration comprise entre 10 et 20 avant ajout de polymère(s) et contenant entre 1 et 4% de polymère(s) :

- la température des granulats lors du malaxage avec le bitume est supérieure à 150°C,
- la température du mélange entre granulats et produit bitumineux lors de l'épandage est comprise entre 145°C et 175°C,
- la température du mélange entre granulats et produit bitumineux au coeur du tapis en début de compactage, quand il a lieu, est comprise entre 145°C et 175°C ;

➢ pour un bitume de pénétration comprise entre 20 et 35 avant ajout de polymère(s) et contenant entre 1 et 4% de polymère(s) :

- la température des granulats lors du malaxage avec le bitume est supérieure à 140°C, de préférence comprise entre 140°C et 165°C,
- la température du mélange entre granulats et produit bitumineux lors de l'épandage est comprise entre 130°C et 160°C,
- la température du mélange entre granulats et produit bitumineux au coeur du tapis en début de compactage, quand il a lieu, est comprise entre 130°C et 160°C ;

➢ pour un bitume de pénétration comprise entre 35 et 50 avant ajout de polymère(s) et contenant entre 1 et 4% de polymère(s) :

- la température des granulats lors du malaxage avec le bitume est supérieure à 130°C,
- la température du mélange entre granulats et produit bitumineux lors de l'épandage est comprise entre 120°C et 150°C,
- la température du mélange entre granulats et produit bitumineux au coeur du tapis en début de compactage, quand il a lieu, est comprise entre 120°C et 150°C ;

➢ pour un bitume de pénétration comprise entre 50 et 70 avant ajout de polymère(s) et contenant entre 1 et 4% de polymère(s) :

- la température des granulats lors du malaxage avec le bitume est supérieure à 120°C,
- la température du mélange entre granulats et produit bitumineux lors de l'épandage est comprise entre 115°C et 140°C,
- la température du mélange entre granulats et produit bitumineux au coeur du tapis en début de compactage, quand il a lieu, est comprise entre 115°C et 140°C ;

➢ pour un bitume de pénétration comprise entre 70 et 100 avant ajout de polymère(s) et contenant entre 1 et 4% de polymère(s) :

- la température des granulats lors du malaxage avec le bitume est supérieure à 120°C, de préférence comprise entre 120°C et 140°C,
- la température du mélange entre granulats et produit bitumineux lors de l'épandage est comprise entre 110°C et 135°C,
- la température du mélange entre granulats et produit bitumineux au coeur du tapis en début de compactage, quand il a lieu, est comprise entre 110°C et 135°C ;

➢ pour un bitume de pénétration comprise entre 100 et 160 avant ajout de polymère et contenant entre 1 et 4% de polymère(s) :

- la température des granulats lors du malaxage avec le bitume est supérieure à 120°C,
- la température du mélange entre granulats et produit bitumineux lors de l'épandage est comprise entre 105°C et 130°C,
- la température du mélange entre granulats et produit bitumineux au coeur du tapis en début de compactage, quand il a lieu, est comprise entre 105°C et 130°C ;

➢ pour un bitume pur de pénétration comprise entre 160 et 250 avant ajout de polymère(s) et contenant entre 1 et 4% de polymère(s) :

- la température des granulats lors du malaxage avec le bitume est supérieure à 120°C,
- la température du mélange entre granulats et produit bitumineux lors de l'épandage est comprise entre 100°C et 125°C,
- la température du mélange entre granulats et produit bitumineux au coeur du tapis en début de compactage, quand il a lieu, est comprise entre 100°C et 125°C ;

➢ pour un bitume de pénétration comprise entre 10 et 20 avant ajout de polymère(s) et contenant entre 4 et 8% de polymère(s) :

- la température des granulats lors du malaxage avec le bitume est supérieure à 155°C,
- la température du mélange entre granulats et produit bitumineux lors de l'épandage est comprise entre 150°C et 180°C,
- la température du mélange entre granulats et produit bitumineux au coeur du tapis en début de compactage, quand il a lieu, est comprise entre 150°C et 180°C ;

➢ pour un bitume de pénétration comprise entre 20 et 35 avant ajout de polymère(s) et contenant entre 4 et 8% de polymère(s) :

- la température des granulats lors du malaxage avec le bitume est supérieure à 145°C,
- la température du mélange entre granulats et produit bitumineux lors de l'épandage est comprise entre 135°C et 165°C,
- la température du mélange entre granulats et produit bitumineux au coeur du tapis en début de compactage, quand il a lieu, est comprise entre 135°C et 165°C ;

➢ pour un bitume de pénétration comprise entre 35 et 50 avant ajout de polymère(s) et contenant entre 4 et 8% de polymère(s) :

- la température des granulats lors du malaxage avec le bitume est supérieure à 135°C,
- la température du mélange entre granulats et produit bitumineux lors de l'épandage est comprise entre 125°C et 155°C,
- la température du mélange entre granulats et produit bitumineux au coeur du tapis en début de compactage, quand il a lieu, est comprise entre 125°C et 155°C ;

➢ pour un bitume de pénétration comprise entre 50 et 70 avant ajout de polymère(s) et contenant entre 4 et 8% de polymère(s) :

- la température des granulats lors du malaxage avec le bitume est supérieure à 130°C,
- la température du mélange entre granulats et produit bitumineux lors de l'épandage est comprise entre 120°C et 145°C,
- la température du mélange entre granulats et produit bitumineux au coeur du tapis en début de compactage, quand il a lieu, est comprise entre 120°C et 145°C ;

➢ pour un bitume de pénétration comprise entre 70 et 100 avant ajout de polymère(s) et contenant entre 4 et 8% de polymère(s) :

- la température des granulats lors du malaxage avec le bitume est supérieure à 125°C,
- la température du mélange entre granulats et produit bitumineux lors de l'épandage est comprise entre 120°C et 140°C,
- la température du mélange entre granulats et produit bitumineux au coeur du tapis en début de compactage, quand il a lieu, est comprise entre 115°C et 140°C ;

➢ pour un bitume de pénétration comprise entre 100 et 160 avant ajout de polymère(s) et contenant entre 4 et 8% de polymère(s) :

- la température des granulats lors du malaxage avec le bitume est supérieure à 125°C,
- la température du mélange entre granulats et produit bitumineux lors de l'épandage est comprise entre 115°C et 135°C,
- la température du mélange entre granulats et produit bitumineux au coeur du tapis en début de compactage, quand il a lieu, est comprise entre 110°C et 135°C ;

➤ pour un bitume pur de pénétration comprise entre 160 et 250 avant ajout de polymère(s) et contenant entre 4 et 8% de polymère(s) :

- la température des granulats lors du malaxage avec le bitume est supérieure à 125°C,
- la température du mélange entre granulats et produit bitumineux lors de l'épandage est comprise entre 110°C et 130°C,
- la température du mélange entre granulats et produit bitumineux au coeur du tapis en début de compactage, quand il a lieu, est comprise entre 105°C et 130°C.

2. Procédé selon la revendication 1, dans lequel :

➤ pour un bitume pur de pénétration comprise entre 10 et 20 :

- la température des granulats lors du malaxage avec le bitume est comprise entre 130 et 150°C,
- la température du mélange entre granulats et produit bitumineux lors de l'épandage est comprise entre 120 et 150°C,
- la température du mélange entre granulats et produit bitumineux au coeur du tapis en début de compactage, quand il a lieu, est comprise entre 120 et 150°C ;

➤ pour un bitume pur de pénétration comprise entre 20 et 35 :

- la température des granulats lors du malaxage avec le bitume est comprise entre 120 et 150 °C,
- la température du mélange entre granulats et produit bitumineux lors de l'épandage est comprise entre 110 et 135°C,
- la température du mélange entre granulats et produit bitumineux au coeur du tapis en début de compactage, quand il a lieu, est comprise entre 110°C et 135°C ;

➤ pour un bitume pur de pénétration comprise entre 35 et 50 :

- la température des granulats lors du malaxage avec le bitume est comprise entre 110°C et 140 °C,
- la température du mélange entre granulats et produit bitumineux lors de l'épandage est comprise entre 95°C et 125°C,
- la température du mélange entre granulats et produit bitumineux au coeur du tapis en début de compactage, quand il a lieu, est comprise entre 95°C et 125°C ;

➤ pour un bitume pur de pénétration comprise entre 50 et 70 :

- la température des granulats lors du malaxage avec le bitume est comprise entre 105°C et 135°C,
- la température du mélange entre granulats et produit bitumineux lors de l'épandage est comprise entre 90°C et 120°C,
- la température du mélange entre granulats et produit bitumineux au coeur du tapis en début de compactage, quand il a lieu, est comprise entre 85°C et 120°C ;

➤ pour un bitume pur de pénétration comprise entre 70 et 100 :

- la température des granulats lors du malaxage avec le bitume est comprise entre 100°C et 125°C,
- la température du mélange entre granulats et produit bitumineux lors de l'épandage est comprise entre 85°C et 115°C,
- la température du mélange entre granulats et produit bitumineux au coeur du tapis en début de compactage, quand il a lieu, est comprise entre 85°C et 115°C,

➤ pour un bitume pur de pénétration comprise entre 100 et 160 :

- la température des granulats lors du malaxage avec le bitume est comprise entre 100°C et 125°C,
- la température du mélange entre granulats et produit bitumineux lors de l'épandage est comprise entre 80°C et 105°C,

■ la température du mélange entre granulats et produit bitumineux au coeur du tapis en début de compactage, quand il a lieu, est comprise entre 80°C et 105°C ;

> pour un bitume pur de pénétration comprise entre 160 et 250 :

■ la température des granulats lors du malaxage avec le bitume est comprise entre 100°C et 120°C,
■ la température du mélange entre granulats et produit bitumineux lors de l'épandage est comprise entre 75°C et 100°C,
■ la température du mélange entre granulats et produit bitumineux au coeur du tapis en début de compactage, quand il a lieu, est comprise entre 75°C et 100°C ;

➢ pour un bitume de pénétration comprise entre 10 et 20 avant ajout de polymère(s) et contenant entre 1 et 4% de polymère(s) :

■ la température des granulats lors du malaxage avec le bitume est comprise entre 150°C et 180°C,
■ la température du mélange entre granulats et produit bitumineux lors de l'épandage est comprise entre 145°C et 175°C,
■ la température du mélange entre granulats et produit bitumineux au coeur du tapis en début de compactage, quand il a lieu, est comprise entre 145°C et 175°C ;

➢ pour un bitume de pénétration comprise entre 20 et 35 avant ajout de polymère(s) et contenant entre 1 et 4% de polymère(s) :

■ la température des granulats lors du malaxage avec le bitume est comprise entre 140°C et 165°C,
■ la température du mélange entre granulats et produit bitumineux lors de l'épandage est comprise entre 130°C et 160°C,
■ la température du mélange entre granulats et produit bitumineux au coeur du tapis en début de compactage, quand il a lieu, est comprise entre 130°C et 160°C ;

➢ pour un bitume de pénétration comprise entre 35 et 50 avant ajout de polymère(s) et contenant entre 1 et 4% de polymère(s) :

■ la température des granulats lors du malaxage avec le bitume est comprise entre 130°C et 155°C,
■ la température du mélange entre granulats et produit bitumineux lors de l'épandage est comprise entre 120°C et 150°C,
■ la température du mélange entre granulats et produit bitumineux au coeur du tapis en début de compactage, quand il a lieu, est comprise entre 120°C et 150°C ;

➢ pour un bitume de pénétration comprise entre 50 et 70 avant ajout de polymère(s) et contenant entre 1 et 4% de polymère(s) :

■ la température des granulats lors du malaxage avec le bitume est comprise entre 120°C et 150°C,
■ la température du mélange entre granulats et produit bitumineux lors de l'épandage est comprise entre 115°C et 140°C,
■ la température du mélange entre granulats et produit bitumineux au coeur du tapis en début de compactage, quand il a lieu, est comprise entre 115°C et 140°C ;

➢ pour un bitume de pénétration comprise entre 70 et 100 avant ajout de polymère(s) et contenant entre 1 et 4% de polymère(s) :

■ la température des granulats lors du malaxage avec le bitume est comprise entre 120°C et 140°C,
■ la température du mélange entre granulats et produit bitumineux lors de l'épandage est comprise entre 110°C et 135°C,
■ la température du mélange entre granulats et produit bitumineux au coeur du tapis en début de compactage, quand il a lieu, est comprise entre 110°C et 135°C ;

➢ pour un bitume de pénétration comprise entre 100 et 160 avant ajout de polymère et contenant entre 1 et 4% de polymère(s) :

- la température des granulats lors du malaxage avec le bitume est comprise entre 120°C et 140°C,
- la température du mélange entre granulats et produit bitumineux lors de l'épandage est comprise entre 105°C et 130°C,
- la température du mélange entre granulats et produit bitumineux au coeur du tapis en début de compactage, quand il a lieu, est comprise entre 105°C et 130°C ;

➢ pour un bitume pur de pénétration comprise entre 160 et 250 avant ajout de polymère(s) et contenant entre 1 et 4% de polymère(s) :

- la température des granulats lors du malaxage avec le bitume est comprise entre 120°C et 140°C,
- la température du mélange entre granulats et produit bitumineux lors de l'épandage est comprise entre 100°C et 125°C,
- la température du mélange entre granulats et produit bitumineux au coeur du tapis en début de compactage, quand il a lieu, est comprise entre 100°C et 125°C ;

➢ pour un bitume de pénétration comprise entre 10 et 20 avant ajout de polymère(s) et contenant entre 4 et 8% de polymère(s) :

- la température des granulats lors du malaxage avec le bitume est comprise entre 155°C et 185°C,
- la température du mélange entre granulats et produit bitumineux lors de l'épandage est comprise entre 150°C et 180°C,
- la température du mélange entre granulats et produit bitumineux au coeur du tapis en début de compactage, quand il a lieu, est comprise entre 150°C et 180°C ;

➢ pour un bitume de pénétration comprise entre 20 et 35 avant ajout de polymère(s) et contenant entre 4 et 8% de polymère(s) :

- la température des granulats lors du malaxage avec le bitume est comprise entre 145°C et 170°C,
- la température du mélange entre granulats et produit bitumineux lors de l'épandage est comprise entre 135°C et 165°C,
- la température du mélange entre granulats et produit bitumineux au coeur du tapis en début de compactage, quand il a lieu, est comprise entre 135°C et 165°C ;

➢ pour un bitume de pénétration comprise entre 35 et 50 avant ajout de polymère(s) et contenant entre 4 et 8% de polymère(s) :

- la température des granulats lors du malaxage avec le bitume est comprise entre 135°C et 160°C,
- la température du mélange entre granulats et produit bitumineux lors de l'épandage est comprise entre 125°C et 155°C,
- la température du mélange entre granulats et produit bitumineux au coeur du tapis en début de compactage, quand il a lieu, est comprise entre 125°C et 155°C ;

➢ pour un bitume de pénétration comprise entre 50 et 70 avant ajout de polymère(s) et contenant entre 4 et 8% de polymère(s) :

- la température des granulats lors du malaxage avec le bitume est comprise entre 130°C et 155°C,
- la température du mélange entre granulats et produit bitumineux lors de l'épandage est comprise entre 120°C et 145°C,
- la température du mélange entre granulats et produit bitumineux au coeur du tapis en début de compactage, quand il a lieu, est comprise entre 120°C et 145°C ;

➢ pour un bitume de pénétration comprise entre 70 et 100 avant ajout de polymère(s) et contenant entre 4 et 8% de polymère(s) :

- la température des granulats lors du malaxage avec le bitume est comprise entre 125°C et 145°C,
- la température du mélange entre granulats et produit bitumineux lors de l'épandage est comprise entre 120°C et 140°C,
- la température du mélange entre granulats et produit bitumineux au coeur du tapis en début de compactage, quand il a lieu, est comprise entre 115°C et 140°C ;

➢ pour un bitume de pénétration comprise entre 100 et 160 avant ajout de polymère(s) et contenant entre 4 et 8% de polymère(s) :

- la température des granulats lors du malaxage avec le bitume est comprise entre 125°C et 145°C,
- la température du mélange entre granulats et produit bitumineux lors de l'épandage est comprise entre 115°C et 135°C,
- la température du mélange entre granulats et produit bitumineux au coeur du tapis en début de compactage, quand il a lieu, est comprise entre 110°C et 135°C ;

➢ pour un bitume pur de pénétration comprise entre 160 et 250 avant ajout de polymère(s) et contenant entre 4 et 8% de polymère(s) :

- la température des granulats lors du malaxage avec le bitume est comprise entre 125°C et 145°C,
- la température du mélange entre granulats et produit bitumineux lors de l'épandage est comprise entre 110°C et 130°C,
- la température du mélange entre granulats et produit bitumineux au coeur du tapis en début de compactage, quand il a lieu, est comprise entre 105°C et 130°C.

3. Procédé selon l'une quelconque des revendications 1 ou 2, **caractérisé en ce que** :

➢ pour un bitume pur de pénétration comprise entre 10 et 20 :

- la température des granulats lors du malaxage avec le bitume est comprise entre 135°C et 150°C,
- la température du mélange entre granulats et produit bitumineux lors de l'épandage est comprise entre 125°C et 145°C,
- la température du mélange entre granulats et produit bitumineux au coeur du tapis en début de compactage, quand il a lieu, est comprise entre 125°C et 145°C ;

➢ pour un bitume pur de pénétration comprise entre 20 et 35 :

- la température des granulats lors du malaxage avec le bitume est comprise entre 125°C et 135°C,
- la température du mélange entre granulats et produit bitumineux lors de l'épandage est comprise entre 115°C et 125°C,
- la température du mélange entre granulats et produit bitumineux au coeur du tapis en début de compactage, quand il a lieu, est comprise entre 105°C et 125°C ;

➢ pour un bitume pur de pénétration comprise entre 35 et 50 :

- la température des granulats lors du malaxage avec le bitume est comprise entre 115°C et 125°C,
- la température du mélange entre granulats et produit bitumineux lors de l'épandage est comprise entre 105°C et 115°C,
- la température du mélange entre granulats et produit bitumineux au coeur du tapis en début de compactage, quand il a lieu, est comprise entre 95°C et 105°C ;

➢ pour un bitume pur de pénétration comprise entre 50 et 70 :

- la température des granulats lors du malaxage avec le bitume est comprise entre 105°C et 115°C,
- la température du mélange entre granulats et produit bitumineux lors de l'épandage est comprise entre 95°C et 105°C,
- la température du mélange entre granulats et produit bitumineux au coeur du tapis en début de compactage, quand il a lieu, est comprise entre 85°C et 95°C ;

➢ pour un bitume pur de pénétration comprise entre 70 et 100 :

- la température des granulats lors du malaxage avec le bitume est comprise entre 100°C et 105°C,
- la température du mélange entre granulats et produit bitumineux lors de l'épandage est comprise entre 85°C et 95°C,
- la température du mélange entre granulats et produit bitumineux au coeur du tapis en début de compactage, quand il a lieu, est comprise entre 85°C et 95°C ;

➢ pour un bitume pur de pénétration comprise entre 100 et 160 :

- la température des granulats lors du malaxage avec le bitume est comprise entre 100°C et 105°C,
- la température du mélange entre granulats et produit bitumineux lors de l'épandage est comprise entre 85°C et 95°C,
- la température du mélange entre granulats et produit bitumineux au coeur du tapis en début de compactage, quand il a lieu, est comprise entre 85°C et 95°C ;

➢ pour un bitume pur de pénétration comprise entre 160 et 250 :

- la température des granulats lors du malaxage avec le bitume est comprise entre 100°C et 105°C,
- la température du mélange entre granulats et produit bitumineux lors de l'épandage est comprise entre 80°C et 85°C,
- la température du mélange entre granulats et produit bitumineux au coeur du tapis en début de compactage, quand il a lieu, est comprise entre 80°C et 85°C ;

➢ pour un bitume de pénétration comprise entre 10 et 20 avant ajout de polymère(s) et contenant entre 1 et 4% de polymère(s) :

- la température des granulats lors du malaxage avec le bitume est comprise entre 150°C et 180°C,
- la température du mélange entre granulats et produit bitumineux lors de l'épandage est comprise entre 145°C et 175°C,
- la température du mélange entre granulats et produit bitumineux au coeur du tapis en début de compactage, quand il a lieu, est comprise entre 145°C et 175°C ;

➢ pour un bitume de pénétration comprise entre 20 et 35 avant ajout de polymère(s) et contenant entre 1 et 4% de polymère(s) :

- la température des granulats lors du malaxage avec le bitume est comprise entre 140°C et 150°C,
- la température du mélange entre granulats et produit bitumineux lors de l'épandage est comprise entre 130°C et 145°C,
- la température du mélange entre granulats et produit bitumineux au coeur du tapis en début de compactage, quand il a lieu, est comprise entre 130°C et 145°C ;

➢ pour un bitume de pénétration comprise entre 35 et 50 avant ajout de polymère(s) et contenant entre 1 et 4% de polymère(s) :

- la température des granulats lors du malaxage avec le bitume est comprise entre 130°C et 140°C,
- la température du mélange entre granulats et produit bitumineux lors de l'épandage est comprise entre 120°C et 130°C,
- la température du mélange entre granulats et produit bitumineux au coeur du tapis en début de compactage, quand il a lieu, est comprise entre 120°C et 130°C ;

➢ pour un bitume de pénétration comprise entre 50 et 70 avant ajout de polymère(s) et contenant entre 1 et 4% de polymère(s) :

- la température des granulats lors du malaxage avec le bitume est comprise entre 120°C et 130°C,
- la température du mélange entre granulats et produit bitumineux lors de l'épandage est comprise entre 115°C et 120°C,
- la température du mélange entre granulats et produit bitumineux au coeur du tapis en début de compactage, quand il a lieu, est comprise entre 110°C et 120°C ;

➢ pour un bitume de pénétration comprise entre 70 et 100 avant ajout de polymère(s) et contenant entre 1 et 4% de polymère(s) :

- la température des granulats lors du malaxage avec le bitume est comprise entre 120°C et 130°C,
- la température du mélange entre granulats et produit bitumineux lors de l'épandage est comprise entre 115°C et 120°C,
- la température du mélange entre granulats et produit bitumineux au coeur du tapis en début de compactage, quand il a lieu, est comprise entre 110°C et 120°C ;

➢ pour un bitume de pénétration comprise entre 100 et 160 avant ajout de polymère et contenant entre 1 et 4% de polymère(s) :

- la température des granulats lors du malaxage avec le bitume est comprise entre 120°C et 130°C,
- la température du mélange entre granulats et produit bitumineux lors de l'épandage est comprise entre 105°C et 115°C,
- la température du mélange entre granulats et produit bitumineux au coeur du tapis en début de compactage, quand il a lieu, est comprise entre 105°C et 110°C ;

➢ pour un bitume pur de pénétration comprise entre 160 et 250 avant ajout de polymère(s) et contenant entre 1 et 4% de polymère(s) :

- la température des granulats lors du malaxage avec le bitume est comprise entre 120°C et 130°C,
- la température du mélange entre granulats et produit bitumineux lors de l'épandage est comprise entre 105°C et 115°C,
- la température du mélange entre granulats et produit bitumineux au coeur du tapis en début de compactage, quand il a lieu, est comprise entre 100°C et 105°C ;

➢ pour un bitume de pénétration comprise entre 10 et 20 avant ajout de polymère(s) et contenant entre 4 et 8% de polymère(s) :

- la température des granulats lors du malaxage avec le bitume est comprise entre 165°C et 185°C,
- la température du mélange entre granulats et produit bitumineux lors de l'épandage est comprise entre 155°C et 180°C,
- la température du mélange entre granulats et produit bitumineux au coeur du tapis en début de compactage, quand il a lieu, est comprise entre 155°C et 180°C ;

➢ pour un bitume de pénétration comprise entre 20 et 35 avant ajout de polymère(s) et contenant entre 4 et 8% de polymère(s) :

- la température des granulats lors du malaxage avec le bitume est comprise entre 155°C et 165°C,
- la température du mélange entre granulats et produit bitumineux lors de l'épandage est comprise entre 145°C et 155°C,
- la température du mélange entre granulats et produit bitumineux au coeur du tapis en début de compactage, quand il a lieu, est comprise entre 145°C et 155°C ;

➢ pour un bitume de pénétration comprise entre 35 et 50 avant ajout de polymère(s) et contenant entre 4 et 8% de polymère(s) :

- la température des granulats lors du malaxage avec le bitume est comprise entre 145°C et 155°C,
- la température du mélange entre granulats et produit bitumineux lors de l'épandage est comprise entre 135°C et 145°C,
- la température du mélange entre granulats et produit bitumineux au coeur du tapis en début de compactage, quand il a lieu, est comprise entre 130°C et 145°C ;

➢ pour un bitume de pénétration comprise entre 50 et 70 avant ajout de polymère(s) et contenant entre 4 et 8% de polymère(s) :

- la température des granulats lors du malaxage avec le bitume est comprise entre 135°C et 145°C,
- la température du mélange entre granulats et produit bitumineux lors de l'épandage est comprise entre 125°C et 135°C,
- la température du mélange entre granulats et produit bitumineux au coeur du tapis en début de compactage, quand il a lieu, est comprise entre 125°C et 130°C ;

➢ pour un bitume de pénétration comprise entre 70 et 100 avant ajout de polymère(s) et contenant entre 4 et 8% de polymère(s) :

- la température des granulats lors du malaxage avec le bitume est comprise entre 125°C et 135°C,
- la température du mélange entre granulats et produit bitumineux lors de l'épandage est comprise entre 120°C et 125°C,
- la température du mélange entre granulats et produit bitumineux au coeur du tapis en début de compactage, quand il a lieu, est comprise entre 120°C et 125°C ;

➢ pour un bitume de pénétration comprise entre 100 et 160 avant ajout de polymère(s) et contenant entre 4 et 8% de polymère(s) :

- la température des granulats lors du malaxage avec le bitume est comprise entre 125°C et 135°C,
- la température du mélange entre granulats et produit bitumineux lors de l'épandage est comprise entre 115°C et 120°C,
- la température du mélange entre granulats et produit bitumineux au coeur du tapis en début de compactage, quand il a lieu, est comprise entre 115°C et 120°C ;

➢ pour un bitume pur de pénétration comprise entre 160 et 250 avant ajout de polymère(s) et contenant entre 4 et 8% de polymère(s) :

- la température des granulats lors du malaxage avec le bitume est comprise entre 125°C et 135°C,
- la température du mélange entre granulats et produit bitumineux lors de l'épandage est comprise entre 110°C et 115°C,
- la température du mélange entre granulats et produit bitumineux au coeur du tapis en début de compactage, quand il a lieu, est comprise entre 110°C et 115°C.

**4.** Procédé selon l'une quelconque des revendications 1 à 3, **caractérisé en ce que** le ou les additifs B sont pulvérisés sur les granulats chauffés, avant et/ou pendant l'ajout du produit bitumineux.

**5.** Procédé selon l'une quelconque des revendications 1 à 4, **caractérisé en ce que** le ou les additifs B sont ajoutés au produit bitumineux en amont de la zone de mélange entre granulats et produit bitumineux.

**6.** Utilisation des enrobés préparés selon le procédé de l'une quelconque des revendications 1 à 5, pour la réalisation de matériaux dans le domaine de l'étanchéité, la construction et l'entretien de tapis routiers, trottoirs, pistes cyclables, aires de jeux, aires de stationnement et pistes d'aviation.

**7.** Surface, tapis routier, trottoir, piste cyclable, aire de jeux, aire de stationnement ou piste d'aviation, revêtu en totalité ou partie par au moins un enrobé obtenu selon le procédé de l'une quelconque des revendications 1 à 5.

**Patentansprüche**

**1.** Verfahren zur Herstellung eines bituminösen beschichteten Materials, umfassend mindestens ein Granulat, mindestens ein bituminöses Produkt und mindestens ein Additiv B,
**dadurch gekennzeichnet, dass**:

- das Additiv B mindestens eine Verbindung (B1) mit der Formel enthält:

$$(R-O-A-)_c-P(=O)-OH_d \qquad (B1),$$

wobei P ein Phosphoratom ist, c zwischen 1 und 2 ist, c + d gleich 3 sind, A eine Bindung oder eine zweiwertige Gruppe darstellt, umfassend mindestens eine Propylenoxy- (OP-) Einheit und/oder mindestens eine Ethylenoxy- (OE-) Einheit, und R eine Kohlenwasserstoffkette mit 1 bis 30 Kohlenstoffatomen darstellt, wobei die Kette linear, verzweigt, gesättigt, ungesättigt sein kann, wobei die Kette mindestens einen aromatischen Ring enthalten kann oder nicht, und die Dosierung an Additiv(en) B1, zurückgeführt auf eine Tonne des bituminösen Produkts, zwischen 0,3 kg und 20 kg beträgt;

- das Additiv B gegebenenfalls, jedoch am häufigsten, Phosphorsäure enthält, wobei die Dosierung an Phosphorsäure, zurückgeführt auf eine Tonne des bituminösen Produkts, kleiner als 2 kg ist;
- das Additiv B gegebenenfalls, jedoch am häufigsten, mindestens ein Pyrophosphat der Verbindung B1 in einer Dosierung, zurückgeführt auf eine Tonne des bituminösen Produkts, von weniger als 20 kg enthält; und
- das bituminöse Produkt eine Abweichung aufweist zwischen der Penetration vor dem Kontakt mit den Granulaten und der Penetration nach der Extraktion des beschichteten Materials von kleiner als 5 zehntel Millimeter für ein Bitumen mit einer Initialpenetration zwischen 20 und 30 zehntel Millimeter, kleiner als 15 zehntel Millimeter für ein Bitumen mit einer Initialpenetration zwischen 35 und 50 zehntel Millimeter, kleiner als 20 zehntel Millimeter für ein Bitumen mit einer Initialpenetration zwischen 50 und 70 zehntel Millimeter, kleiner als 25 zehntel Millimeter für ein Bitumen mit einer Initialpenetration zwischen 70 zehntel Millimeter und 100 zehntel Millimeter, kleiner als 50 zehntel Millimeter für ein Bitumen mit einer Initialpenetration zwischen 160 und 220 zehntel Millimeter;

wobei das Verfahren eine physikalische Mischung der Granulate mit dem mindestens einem bituminösen Produkt und dem mindestens einen Additiv B umfasst, wobei:

- für ein reines Bitumen mit einer Penetration zwischen 10 und 20:

  • die Temperatur der Granulate bei der Mischung mit dem Bitumen größer ist als 130 °C,
  • die Temperatur der Mischung zwischen den Granulaten und dem bituminösen Produkt bei der Verteilung zwischen 120 und 150 °C beträgt,
  • die Temperatur der Mischung zwischen den Granulaten und dem bituminösen Produkt im Inneren des Belags am Beginn der Kompaktierung, wenn diese stattfindet, zwischen 120 und 150 °C beträgt;

- für ein reines Bitumen mit einer Penetration zwischen 20 und 35:

  • die Temperatur der Granulate bei der Mischung mit dem Bitumen größer ist als 120 °C,
  • die Temperatur der Mischung zwischen den Granulaten und dem bituminösen Produkt bei der Verteilung zwischen 110 und 135 °C beträgt,
  • die Temperatur der Mischung zwischen den Granulaten und dem bituminösen Produkt im Inneren des Belags am Beginn der Kompaktierung, wenn diese stattfindet, zwischen 110 und 135 °C beträgt;

- für ein reines Bitumen mit einer Penetration zwischen 35 und 50:

  • die Temperatur der Granulate bei der Mischung mit dem Bitumen größer ist als 110 °C,
  • die Temperatur der Mischung zwischen den Granulaten und dem bituminösen Produkt bei der Verteilung zwischen 95 °C und 125 °C beträgt,
  • die Temperatur der Mischung zwischen den Granulaten und dem bituminösen Produkt im Inneren des Belags am Beginn der Kompaktierung, wenn diese stattfindet, zwischen 95 °C und 125 °C beträgt

- für ein reines Bitumen mit einer Penetration zwischen 50 und 70:

  • die Temperatur der Granulate bei der Mischung mit dem Bitumen größer ist als 105 °C,
  • die Temperatur der Mischung zwischen den Granulaten und dem bituminösen Produkt bei der Verteilung zwischen 90 °C und 120 °C beträgt,
  • die Temperatur der Mischung zwischen den Granulaten und dem bituminösen Produkt im Inneren des Belags am Beginn der Kompaktierung, wenn diese stattfindet, zwischen 85 °C und 120 °C beträgt;

- für ein reines Bitumen mit einer Penetration zwischen 70 und 100:

  • die Temperatur der Granulate bei der Mischung mit dem Bitumen größer ist als 100 °C,
  • die Temperatur der Mischung zwischen den Granulaten und dem bituminösen Produkt bei der Verteilung zwischen 85 °C und 115 °C beträgt,
  • die Temperatur der Mischung zwischen den Granulaten und dem bituminösen Produkt im Inneren des Belags am Beginn der Kompaktierung, wenn diese stattfindet, zwischen 85 °C und 115 °C beträgt;

- für ein reines Bitumen mit einer Penetration zwischen 100 und 160:

• die Temperatur der Granulate bei der Mischung mit dem Bitumen größer ist als 100 °C,
• die Temperatur der Mischung zwischen den Granulaten und dem bituminösen Produkt bei der Verteilung zwischen 80 °C und 105 °C beträgt,
• die Temperatur der Mischung zwischen den Granulaten und dem bituminösen Produkt im Inneren des Belags am Beginn der Kompaktierung, wenn diese stattfindet, zwischen 80 °C und 105 °C beträgt;

- für ein reines Bitumen mit einer Penetration zwischen 160 und 250:

• die Temperatur der Granulate bei der Mischung mit dem Bitumen größer ist als 100 °C,
• die Temperatur der Mischung zwischen den Granulaten und dem bituminösen Produkt bei der Verteilung zwischen 75 °C und 100 °C beträgt,
• die Temperatur der Mischung zwischen den Granulaten und dem bituminösen Produkt im Inneren des Belags am Beginn der Kompaktierung, wenn diese stattfindet, zwischen 75 °C und 100 °C beträgt;

- für ein Bitumen mit einer Penetration zwischen 10 und 20 vor dem Zusatz von Polymer(en) und enthaltend zwischen 1 und 4 % Polymer(e):

• die Temperatur der Granulate bei der Mischung mit dem Bitumen größer ist als 150 °C,
• die Temperatur der Mischung zwischen den Granulaten und dem bituminösen Produkt bei der Verteilung zwischen 145 °C und 175 °C beträgt,
• die Temperatur der Mischung zwischen den Granulaten und dem bituminösen Produkt im Inneren des Belags am Beginn der Kompaktierung, wenn diese stattfindet, zwischen 145 °C und 175 °C beträgt;,

- für ein Bitumen mit einer Penetration zwischen 20 und 35 vor dem Zusatz von Polymer(en) und enthaltend zwischen 1 und 4 % Polymer(e):

• die Temperatur der Granulate bei der Mischung mit dem Bitumen größer ist als 140 °C, vorzugsweise zwischen 140 °C und 165 °C beträgt,
• die Temperatur der Mischung zwischen den Granulaten und dem bituminösen Produkt bei der Verteilung zwischen 130 °C und 160 °C beträgt,
• die Temperatur der Mischung zwischen den Granulaten und dem bituminösen Produkt im Inneren des Belags am Beginn der Kompaktierung, wenn diese stattfindet, zwischen 130 °C und 160 °C beträgt;

- für ein Bitumen mit einer Penetration zwischen 35 und 50 vor dem Zusatz von Polymer(en) und enthaltend zwischen 1 und 4 % Polymer(e):

• die Temperatur der Granulate bei der Mischung mit dem Bitumen größer ist als 130 °C,
• die Temperatur der Mischung zwischen den Granulaten und dem bituminösen Produkt bei der Verteilung zwischen 120 °C und 150 °C beträgt,
• die Temperatur der Mischung zwischen den Granulaten und dem bituminösen Produkt im Inneren des Belags am Beginn der Kompaktierung, wenn diese stattfindet, zwischen 120 °C und 150 °C beträgt;

- für ein Bitumen mit einer Penetration zwischen 50 und 70 vor dem Zusatz von Polymer(en) und enthaltend zwischen 1 und 4 % Polymer(e):

• die Temperatur der Granulate bei der Mischung mit dem Bitumen größer ist als 120 °C,
• die Temperatur der Mischung zwischen den Granulaten und dem bituminösen Produkt bei der Verteilung zwischen 115 °C und 140 °C beträgt,
• die Temperatur der Mischung zwischen den Granulaten und dem bituminösen Produkt im Inneren des Belags am Beginn der Kompaktierung, wenn diese stattfindet, zwischen 115 °C und 140 °C beträgt;

- für ein Bitumen mit einer Penetration zwischen 70 und 100 vor dem Zusatz von Polymer(en) und enthaltend zwischen 1 und 4 % Polymer(e):

• die Temperatur der Granulate bei der Mischung mit dem Bitumen größer ist als 120 °C, vorzugsweise zwischen 120 °C und 140 °C beträgt,
• die Temperatur der Mischung zwischen den Granulaten und dem bituminösen Produkt bei der Verteilung zwischen 110 °C und 135 °C beträgt,

• die Temperatur der Mischung zwischen den Granulaten und dem bituminösen Produkt im Inneren des Belags am Beginn der Kompaktierung, wenn diese stattfindet, zwischen 110 °C und 135 °C beträgt;

- für ein Bitumen mit einer Penetration zwischen 100 und 160 vor dem Zusatz von Polymer und enthaltend zwischen 1 und 4 % Polymer(e):

• die Temperatur der Granulate bei der Mischung mit dem Bitumen größer ist als 120 °C,
• die Temperatur der Mischung zwischen den Granulaten und dem bituminösen Produkt bei der Verteilung zwischen 105 °C und 130 °C beträgt,
• die Temperatur der Mischung zwischen den Granulaten und dem bituminösen Produkt im Inneren des Belags am Beginn der Kompaktierung, wenn diese stattfindet, zwischen 105 °C und 130 °C beträgt;

- für ein reines Bitumen mit einer Penetration zwischen 160 und 250 vor dem Zusatz von Polymer(en) und enthaltend zwischen 1 und 4 % Polymer(e):

• die Temperatur der Granulate bei der Mischung mit dem Bitumen größer ist als 120 °C,
• die Temperatur der Mischung zwischen den Granulaten und dem bituminösen Produkt bei der Verteilung zwischen 100 °C und 125 °C beträgt,
• die Temperatur der Mischung zwischen den Granulaten und dem bituminösen Produkt im Inneren des Belags am Beginn der Kompaktierung, wenn diese stattfindet, zwischen 100 °C und 125 °C beträgt;

- für ein Bitumen mit einer Penetration zwischen 10 und 20 vor dem Zusatz von Polymer(en) und enthaltend zwischen 4 und 8 % Polymer(e):

• die Temperatur der Granulate bei der Mischung mit dem Bitumen größer ist als 155 °C,
• die Temperatur der Mischung zwischen den Granulaten und dem bituminösen Produkt bei der Verteilung zwischen 150 °C und 180 °C beträgt,
• die Temperatur der Mischung zwischen den Granulaten und dem bituminösen Produkt im Inneren des Belags am Beginn der Kompaktierung, wenn diese stattfindet, zwischen 150 °C und 180 °C beträgt;

- für ein Bitumen mit einer Penetration zwischen 20 und 35 vor dem Zusatz von Polymer(en) und enthaltend zwischen 4 und 8 % Polymer(e):

• die Temperatur der Granulate bei der Mischung mit dem Bitumen größer ist als 145 °C,
• die Temperatur der Mischung zwischen den Granulaten und dem bituminösen Produkt bei der Verteilung zwischen 135 °C und 165 °C beträgt,
• die Temperatur der Mischung zwischen den Granulaten und dem bituminösen Produkt im Inneren des Belags am Beginn der Kompaktierung, wenn diese stattfindet, zwischen 135 °C und 165 °C beträgt;,

- für ein Bitumen mit einer Penetration zwischen 35 und 50 vor dem Zusatz von Polymer(en) und enthaltend zwischen 4 und 8 % Polymer(e):

• die Temperatur der Granulate bei der Mischung mit dem Bitumen größer ist als 135 °C,
• die Temperatur der Mischung zwischen den Granulaten und dem bituminösen Produkt bei der Verteilung zwischen 125 °C und 155 °C beträgt,
• die Temperatur der Mischung zwischen den Granulaten und dem bituminösen Produkt im Inneren des Belags am Beginn der Kompaktierung, wenn diese stattfindet, zwischen 125 °C und 155 °C beträgt;

- für ein Bitumen mit einer Penetration zwischen 50 und 70 vor dem Zusatz von Polymer(en) und enthaltend zwischen 4 und 8 % Polymer(e):

• die Temperatur der Granulate bei der Mischung mit dem Bitumen größer ist als 130 °C,
• die Temperatur der Mischung zwischen den Granulaten und dem bituminösen Produkt bei der Verteilung zwischen 120 °C und 145 °C beträgt,
• die Temperatur der Mischung zwischen den Granulaten und dem bituminösen Produkt im Inneren des Belags am Beginn der Kompaktierung, wenn diese stattfindet, zwischen 120 °C und 145 °C beträgt;

- für ein Bitumen mit einer Penetration zwischen 70 und 100 vor dem Zusatz von Polymer(en) und enthaltend zwischen 4 und 8 % Polymer(e):

- die Temperatur der Granulate bei der Mischung mit dem Bitumen größer ist als 125 °C,
- die Temperatur der Mischung zwischen den Granulaten und dem bituminösen Produkt bei der Verteilung zwischen 120 °C und 140 °C beträgt,
- die Temperatur der Mischung zwischen den Granulaten und dem bituminösen Produkt im Inneren des Belags am Beginn der Kompaktierung, wenn diese stattfindet, zwischen 115 °C und 140 °C beträgt;,

- für ein Bitumen mit einer Penetration zwischen 100 und 160 vor dem Zusatz von Polymer(en) und enthaltend zwischen 4 und 8 % Polymer(e):

- die Temperatur der Granulate bei der Mischung mit dem Bitumen größer ist als 125 °C,
- die Temperatur der Mischung zwischen den Granulaten und dem bituminösen Produkt bei der Verteilung zwischen 115 °C und 135 °C beträgt,
- die Temperatur der Mischung zwischen den Granulaten und dem bituminösen Produkt im Inneren des Belags am Beginn der Kompaktierung, wenn diese stattfindet, zwischen 110 °C und 135 °C beträgt;

- für ein reines Bitumen mit einer Penetration zwischen 160 und 250 vor dem Zusatz von Polymer(en) und enthaltend zwischen 4 und 8 % Polymer(e):

- die Temperatur der Granulate bei der Mischung mit dem Bitumen größer ist als 125 °C,
- die Temperatur der Mischung zwischen den Granulaten und dem bituminösen Produkt bei der Verteilung zwischen 110 °C und 130 °C beträgt,
- die Temperatur der Mischung zwischen den Granulaten und dem bituminösen Produkt im Inneren des Belags am Beginn der Kompaktierung, wenn diese stattfindet, zwischen 105 °C und 130 °C beträgt.

2. Verfahren nach Anspruch 1, wobei:

- für ein reines Bitumen mit einer Penetration zwischen 10 und 20:

- die Temperatur der Granulate bei der Mischung mit dem Bitumen zwischen 130 und 150 °C beträgt,
- die Temperatur der Mischung zwischen den Granulaten und dem bituminösen Produkt bei der Verteilung zwischen 120 und 150 °C beträgt,
- die Temperatur der Mischung zwischen den Granulaten und dem bituminösen Produkt im Inneren des Belags am Beginn der Kompaktierung, wenn diese stattfindet, zwischen 120 und 150 °C beträgt;

- für ein reines Bitumen mit einer Penetration zwischen 20 und 35:

- die Temperatur der Granulate bei der Mischung mit dem Bitumen zwischen 120 und 150 °C beträgt,
- die Temperatur der Mischung zwischen den Granulaten und dem bituminösen Produkt bei der Verteilung zwischen 110 und 135 °C beträgt,
- die Temperatur der Mischung zwischen den Granulaten und dem bituminösen Produkt im Inneren des Belags am Beginn der Kompaktierung, wenn diese stattfindet, zwischen 110 °C und 135 °C beträgt;

- für ein reines Bitumen mit einer Penetration zwischen 35 und 50:

- die Temperatur der Granulate bei der Mischung mit dem Bitumen zwischen 110 °C und 140 °C beträgt,
- die Temperatur der Mischung zwischen den Granulaten und dem bituminösen Produkt bei der Verteilung zwischen 95 °C und 125 °C beträgt,
- die Temperatur der Mischung zwischen den Granulaten und dem bituminösen Produkt im Inneren des Belags am Beginn der Kompaktierung, wenn diese stattfindet, zwischen 95 °C und 125 °C beträgt;

- für ein reines Bitumen mit einer Penetration zwischen 50 und 70:

- die Temperatur der Granulate bei der Mischung mit dem Bitumen zwischen 105 °C und 135 °C beträgt,
- die Temperatur der Mischung zwischen den Granulaten und dem bituminösen Produkt bei der Verteilung zwischen 90 °C und 120 °C beträgt,
- die Temperatur der Mischung zwischen den Granulaten und dem bituminösen Produkt im Inneren des Belags am Beginn der Kompaktierung, wenn diese stattfindet, zwischen 85 °C und 120 °C beträgt;

- für ein reines Bitumen mit einer Penetration zwischen 70 und 100:

• die Temperatur der Granulate bei der Mischung mit dem Bitumen zwischen 100 °C und 125 °C beträgt,
• die Temperatur der Mischung zwischen den Granulaten und dem bituminösen Produkt bei der Verteilung zwischen 85 °C und 115 °C beträgt,
• die Temperatur der Mischung zwischen den Granulaten und dem bituminösen Produkt im Inneren des Belags am Beginn der Kompaktierung, wenn diese stattfindet, zwischen 85 °C und 115 °C beträgt;

- für ein reines Bitumen mit einer Penetration zwischen 100 und 160:

• die Temperatur der Granulate bei der Mischung mit dem Bitumen zwischen 100 °C und 125 °C beträgt,
• die Temperatur der Mischung zwischen den Granulaten und dem bituminösen Produkt bei der Verteilung zwischen 80 °C und 105 °C beträgt,
• die Temperatur der Mischung zwischen den Granulaten und dem bituminösen Produkt im Inneren des Belags am Beginn der Kompaktierung, wenn diese stattfindet, zwischen 80 °C und 105 °C beträgt;

- für ein reines Bitumen mit einer Penetration zwischen 160 und 250:

• die Temperatur der Granulate bei der Mischung mit dem Bitumen zwischen 100 °C und 120 °C beträgt,
• die Temperatur der Mischung zwischen den Granulaten und dem bituminösen Produkt bei der Verteilung zwischen 75 °C und 100 °C beträgt,
• die Temperatur der Mischung zwischen den Granulaten und dem bituminösen Produkt im Inneren des Belags am Beginn der Kompaktierung, wenn diese stattfindet, zwischen 75 °C und 100 °C beträgt;

- für ein Bitumen mit einer Penetration zwischen 10 und 20 vor dem Zusatz von Polymer(en) und enthaltend zwischen 1 und 4 % Polymer(e):

• die Temperatur der Granulate bei der Mischung mit dem Bitumen zwischen 150 °C und 180 °C beträgt,
• die Temperatur der Mischung zwischen den Granulaten und dem bituminösen Produkt bei der Verteilung zwischen 145 °C und 175 °C beträgt,
• die Temperatur der Mischung zwischen den Granulaten und dem bituminösen Produkt im Inneren des Belags am Beginn der Kompaktierung, wenn diese stattfindet, zwischen 145 °C und 175 °C beträgt;

- für ein Bitumen mit einer Penetration zwischen 20 und 35 vor dem Zusatz von Polymer(en) und enthaltend zwischen 1 und 4 % Polymer(e):

• die Temperatur der Granulate bei der Mischung mit dem Bitumen zwischen 140 °C und 165 °C beträgt,
• die Temperatur der Mischung zwischen den Granulaten und dem bituminösen Produkt bei der Verteilung zwischen 130 °C und 160 °C beträgt,
• die Temperatur der Mischung zwischen den Granulaten und dem bituminösen Produkt im Inneren des Belags am Beginn der Kompaktierung, wenn diese stattfindet, zwischen 130 °C und 160 °C beträgt;

- für ein Bitumen mit einer Penetration zwischen 35 und 50 vor dem Zusatz von Polymer(en) und enthaltend zwischen 1 und 4 % Polymer(e):

• die Temperatur der Granulate bei der Mischung mit dem Bitumen zwischen 130 °C und 155 °C beträgt,
• die Temperatur der Mischung zwischen den Granulaten und dem bituminösen Produkt bei der Verteilung zwischen 120 °C und 150 °C beträgt,
• die Temperatur der Mischung zwischen den Granulaten und dem bituminösen Produkt im Inneren des Belags am Beginn der Kompaktierung, wenn diese stattfindet, zwischen 120 °C und 150 °C beträgt;

- für ein Bitumen mit einer Penetration zwischen 50 und 70 vor dem Zusatz von Polymer(en) und enthaltend zwischen 1 und 4 % Polymer(e):

• die Temperatur der Granulate bei der Mischung mit dem Bitumen zwischen 120 °C und 150 °C beträgt,
• die Temperatur der Mischung zwischen den Granulaten und dem bituminösen Produkt bei der Verteilung zwischen 115 °C und 140 °C beträgt,
• die Temperatur der Mischung zwischen den Granulaten und dem bituminösen Produkt im Inneren des Belags am Beginn der Kompaktierung, wenn diese stattfindet, zwischen 115 °C und 140 °C beträgt;

- für ein Bitumen mit einer Penetration zwischen 70 und 100 vor dem Zusatz von Polymer(en) und enthaltend zwischen 1 und 4 % Polymer(e):

• die Temperatur der Granulate bei der Mischung mit dem Bitumen zwischen 120 °C und 140 °C beträgt,
• die Temperatur der Mischung zwischen den Granulaten und dem bituminösen Produkt bei der Verteilung zwischen 110 °C und 135 °C beträgt,
• die Temperatur der Mischung zwischen den Granulaten und dem bituminösen Produkt im Inneren des Belags am Beginn der Kompaktierung, wenn diese stattfindet, zwischen 110 °C und 135 °C beträgt;

- für ein Bitumen mit einer Penetration zwischen 100 und 160 vor dem Zusatz von Polymer(en) und enthaltend zwischen 1 und 4 % Polymer(e):

• die Temperatur der Granulate bei der Mischung mit dem Bitumen zwischen 120 °C und 140 °C beträgt,
• die Temperatur der Mischung zwischen den Granulaten und dem bituminösen Produkt bei der Verteilung zwischen 105 °C und 130 °C beträgt,
• die Temperatur der Mischung zwischen den Granulaten und dem bituminösen Produkt im Inneren des Belags am Beginn der Kompaktierung, wenn diese stattfindet, zwischen 105 °C und 130 °C beträgt;

- für ein reines Bitumen mit einer Penetration zwischen 160 und 250 vor dem Zusatz von Polymer(en) und enthaltend zwischen 1 und 4 % Polymer(e):

• die Temperatur der Granulate bei der Mischung mit dem Bitumen zwischen 120 °C und 140 °C beträgt,
• die Temperatur der Mischung zwischen den Granulaten und dem bituminösen Produkt bei der Verteilung zwischen 100 °C und 125 °C beträgt,
• die Temperatur der Mischung zwischen den Granulaten und dem bituminösen Produkt im Inneren des Belags am Beginn der Kompaktierung, wenn diese stattfindet, zwischen 100 °C und 125 °C beträgt;

- für ein Bitumen mit einer Penetration zwischen 10 und 20 vor dem Zusatz von Polymer(en) und enthaltend zwischen 4 und 8 % Polymer(e):

• die Temperatur der Granulate bei der Mischung mit dem Bitumen zwischen 155 °C und 185 °C beträgt,
• die Temperatur der Mischung zwischen den Granulaten und dem bituminösen Produkt bei der Verteilung zwischen 150 °C und 180 °C beträgt,
• die Temperatur der Mischung zwischen den Granulaten und dem bituminösen Produkt im Inneren des Belags am Beginn der Kompaktierung, wenn diese stattfindet, zwischen 150 °C und 180 °C beträgt;

- für ein Bitumen mit einer Penetration zwischen 20 und 35 vor dem Zusatz von Polymer(en) und enthaltend zwischen 4 und 8 % Polymer(e):

• die Temperatur der Granulate bei der Mischung mit dem Bitumen zwischen 145 °C und 170 °C beträgt,
• die Temperatur der Mischung zwischen den Granulaten und dem bituminösen Produkt bei der Verteilung zwischen 135 °C und 165 °C beträgt,
• die Temperatur der Mischung zwischen den Granulaten und dem bituminösen Produkt im Inneren des Belags am Beginn der Kompaktierung, wenn diese stattfindet, zwischen 135 °C und 165 °C beträgt;

- für ein Bitumen mit einer Penetration zwischen 35 und 50 vor dem Zusatz von Polymer(en) und enthaltend zwischen 4 und 8 % Polymer(e):

• die Temperatur der Granulate bei der Mischung mit dem Bitumen zwischen 135 °C und 160 °C beträgt,
• die Temperatur der Mischung zwischen den Granulaten und dem bituminösen Produkt bei der Verteilung zwischen 125 °C und 155 °C beträgt,
• die Temperatur der Mischung zwischen den Granulaten und dem bituminösen Produkt im Inneren des Belags am Beginn der Kompaktierung, wenn diese stattfindet, zwischen 125 °C und 155 °C beträgt;

- für ein Bitumen mit einer Penetration zwischen 50 und 70 vor dem Zusatz von Polymer(en) und enthaltend zwischen 4 und 8 % Polymer(e):

• die Temperatur der Granulate bei der Mischung mit dem Bitumen zwischen 130 °C und 155 °C beträgt,
• die Temperatur der Mischung zwischen den Granulaten und dem bituminösen Produkt bei der Verteilung zwischen 120 °C und 145 °C beträgt,
• die Temperatur der Mischung zwischen den Granulaten und dem bituminösen Produkt im Inneren des Belags am Beginn der Kompaktierung, wenn diese stattfindet, zwischen 120 °C und 145 °C beträgt;

- für ein Bitumen mit einer Penetration zwischen 70 und 100 vor dem Zusatz von Polymer(en) und enthaltend zwischen 4 und 8 % Polymer(e):

• die Temperatur der Granulate bei der Mischung mit dem Bitumen zwischen 125 °C und 145 °C beträgt,
• die Temperatur der Mischung zwischen den Granulaten und dem bituminösen Produkt bei der Verteilung zwischen 120 °C und 140 °C beträgt,
• die Temperatur der Mischung zwischen den Granulaten und dem bituminösen Produkt im Inneren des Belags am Beginn der Kompaktierung, wenn diese stattfindet, zwischen 115 °C und 140 °C beträgt;

- für ein Bitumen mit einer Penetration zwischen 100 und 160 vor dem Zusatz von Polymer(en) und enthaltend zwischen 4 und 8 % Polymer(e):

• die Temperatur der Granulate bei der Mischung mit dem Bitumen zwischen 125 °C und 145 °C beträgt,
• die Temperatur der Mischung zwischen den Granulaten und dem bituminösen Produkt bei der Verteilung zwischen 115 °C und 135 °C beträgt,
• die Temperatur der Mischung zwischen den Granulaten und dem bituminösen Produkt im Inneren des Belags am Beginn der Kompaktierung, wenn diese stattfindet, zwischen 110 °C und 135 °C beträgt;

- für ein reines Bitumen mit einer Penetration zwischen 160 und 250 vor dem Zusatz von Polymer(en) und enthaltend zwischen 4 und 8 % Polymer(e):

• die Temperatur der Granulate bei der Mischung mit dem Bitumen zwischen 125 °C und 145 °C beträgt,
• die Temperatur der Mischung zwischen den Granulaten und dem bituminösen Produkt bei der Verteilung zwischen 110 °C und 130 °C beträgt,
• die Temperatur der Mischung zwischen den Granulaten und dem bituminösen Produkt im Inneren des Belags am Beginn der Kompaktierung, wenn diese stattfindet, zwischen 105 °C und 130 °C beträgt.

3. Verfahren nach einem der Ansprüche 1 oder 2,
**dadurch gekennzeichnet, dass**:

- für ein reines Bitumen mit einer Penetration zwischen 10 und 20:

• die Temperatur der Granulate bei der Mischung mit dem Bitumen zwischen 135 °C und 150 °C beträgt,
• die Temperatur der Mischung zwischen den Granulaten und dem bituminösen Produkt bei der Verteilung zwischen 125 °C und 145 °C beträgt,
• die Temperatur der Mischung zwischen den Granulaten und dem bituminösen Produkt im Inneren des Belags am Beginn der Kompaktierung, wenn diese stattfindet, zwischen 125 °C und 145 °C beträgt;

- für ein reines Bitumen mit einer Penetration zwischen 20 und 35:

• die Temperatur der Granulate bei der Mischung mit dem Bitumen zwischen 125 °C und 135 °C beträgt,
• die Temperatur der Mischung zwischen den Granulaten und dem bituminösen Produkt bei der Verteilung zwischen 115 °C und 125 °C beträgt,
• die Temperatur der Mischung zwischen den Granulaten und dem bituminösen Produkt im Inneren des Belags am Beginn der Kompaktierung, wenn diese stattfindet, zwischen 105 °C und 125 °C beträgt;

- für ein reines Bitumen mit einer Penetration zwischen 35 und 50:

• die Temperatur der Granulate bei der Mischung mit dem Bitumen zwischen 115 °C und 125 °C beträgt,

• die Temperatur der Mischung zwischen den Granulaten und dem bituminösen Produkt bei der Verteilung zwischen 105 °C und 115 °C beträgt,
• die Temperatur der Mischung zwischen den Granulaten und dem bituminösen Produkt im Inneren des Belags am Beginn der Kompaktierung, wenn diese stattfindet, zwischen 95 °C und 105 °C beträgt;

- für ein reines Bitumen mit einer Penetration zwischen 50 und 70:

• die Temperatur der Granulate bei der Mischung mit dem Bitumen zwischen 105 °C und 115 °C beträgt,
• die Temperatur der Mischung zwischen den Granulaten und dem bituminösen Produkt bei der Verteilung zwischen 95 °C und 105 °C beträgt,
• die Temperatur der Mischung zwischen den Granulaten und dem bituminösen Produkt im Inneren des Belags am Beginn der Kompaktierung, wenn diese stattfindet, zwischen 85 °C und 95 °C beträgt;

- für ein reines Bitumen mit einer Penetration zwischen 70 und 100:

• die Temperatur der Granulate bei der Mischung mit dem Bitumen zwischen 100 °C und 105 °C beträgt,
• die Temperatur der Mischung zwischen den Granulaten und dem bituminösen Produkt bei der Verteilung zwischen 85 °C und 95 °C beträgt,
• die Temperatur der Mischung zwischen den Granulaten und dem bituminösen Produkt im Inneren des Belags am Beginn der Kompaktierung, wenn diese stattfindet, zwischen 85 °C und 95 °C beträgt;

- für ein reines Bitumen mit einer Penetration zwischen 100 und 160:

• die Temperatur der Granulate bei der Mischung mit dem Bitumen zwischen 100 °C und 105 °C beträgt,
• die Temperatur der Mischung zwischen den Granulaten und dem bituminösen Produkt bei der Verteilung zwischen 85 °C und 95 °C beträgt,
• die Temperatur der Mischung zwischen den Granulaten und dem bituminösen Produkt im Inneren des Belags am Beginn der Kompaktierung, wenn diese stattfindet, zwischen 85 °C und 95 °C beträgt;

- für ein reines Bitumen mit einer Penetration zwischen 160 und 250:

• die Temperatur der Granulate bei der Mischung mit dem Bitumen zwischen 100 °C und 105 °C beträgt,
• die Temperatur der Mischung zwischen den Granulaten und dem bituminösen Produkt bei der Verteilung zwischen 80 °C und 85 °C beträgt,
• die Temperatur der Mischung zwischen den Granulaten und dem bituminösen Produkt im Inneren des Belags am Beginn der Kompaktierung, wenn diese stattfindet, zwischen 80 °C und 85 °C beträgt;

- für ein Bitumen mit einer Penetration zwischen 10 und 20 vor dem Zusatz von Polymer(en) und enthaltend zwischen 1 und 4 % Polymer(e):

• die Temperatur der Granulate bei der Mischung mit dem Bitumen zwischen 150 °C und 180 °C beträgt,
• die Temperatur der Mischung zwischen den Granulaten und dem bituminösen Produkt bei der Verteilung zwischen 145 °C und 175 °C beträgt,
• die Temperatur der Mischung zwischen den Granulaten und dem bituminösen Produkt im Inneren des Belags am Beginn der Kompaktierung, wenn diese stattfindet, zwischen 145 °C und 175 °C beträgt;

- für ein Bitumen mit einer Penetration zwischen 20 und 35 vor dem Zusatz von Polymer(en) und enthaltend zwischen 1 und 4 % Polymer(e):

• die Temperatur der Granulate bei der Mischung mit dem Bitumen zwischen 140 °C und 150 °C beträgt,
• die Temperatur der Mischung zwischen den Granulaten und dem bituminösen Produkt bei der Verteilung zwischen 130 °C und 145 °C beträgt,
• die Temperatur der Mischung zwischen den Granulaten und dem bituminösen Produkt im Inneren des Belags am Beginn der Kompaktierung, wenn diese stattfindet, zwischen 130 °C und 145 °C beträgt;

- für ein Bitumen mit einer Penetration zwischen 35 und 50 vor dem Zusatz von Polymer(en) und enthaltend zwischen 1 und 4 % Polymer(e):

• die Temperatur der Granulate bei der Mischung mit dem Bitumen zwischen 130 °C und 140 °C beträgt,
• die Temperatur der Mischung zwischen den Granulaten und dem bituminösen Produkt bei der Verteilung zwischen 120 °C und 130 °C beträgt,
• die Temperatur der Mischung zwischen den Granulaten und dem bituminösen Produkt im Inneren des Belags am Beginn der Kompaktierung, wenn diese stattfindet, zwischen 120 °C und 130 °C beträgt;

- für ein Bitumen mit einer Penetration zwischen 50 und 70 vor dem Zusatz von Polymer(en) und enthaltend zwischen 1 und 4 % Polymer(e):

• die Temperatur der Granulate bei der Mischung mit dem Bitumen zwischen 120 °C und 130 °C beträgt,
• die Temperatur der Mischung zwischen den Granulaten und dem bituminösen Produkt bei der Verteilung zwischen 115 °C und 120 °C beträgt,
• die Temperatur der Mischung zwischen den Granulaten und dem bituminösen Produkt im Inneren des Belags am Beginn der Kompaktierung, wenn diese stattfindet, zwischen 110 °C und 120 °C beträgt;

- für ein Bitumen mit einer Penetration zwischen 70 und 100 vor dem Zusatz von Polymer(en) und enthaltend zwischen 1 und 4 % Polymer(e):

• die Temperatur der Granulate bei der Mischung mit dem Bitumen zwischen 120 °C und 130 °C beträgt,
• die Temperatur der Mischung zwischen den Granulaten und dem bituminösen Produkt bei der Verteilung zwischen 115 °C und 120 °C beträgt,
• die Temperatur der Mischung zwischen den Granulaten und dem bituminösen Produkt im Inneren des Belags am Beginn der Kompaktierung, wenn diese stattfindet, zwischen 110 °C und 120 °C beträgt;

- für ein Bitumen mit einer Penetration zwischen 100 und 160 vor dem Zusatz von Polymer(en) und enthaltend zwischen 1 und 4 % Polymer(e):

• die Temperatur der Granulate bei der Mischung mit dem Bitumen zwischen 120 °C und 130 °C beträgt,
• die Temperatur der Mischung zwischen den Granulaten und dem bituminösen Produkt bei der Verteilung zwischen 105 °C und 115 °C beträgt,
• die Temperatur der Mischung zwischen den Granulaten und dem bituminösen Produkt im Inneren des Belags am Beginn der Kompaktierung, wenn diese stattfindet, zwischen 105 °C und 110 °C beträgt;

- für ein reines Bitumen mit einer Penetration zwischen 160 und 250 vor dem Zusatz von Polymer(en) und enthaltend zwischen 1 und 4 % Polymer(e):

• die Temperatur der Granulate bei der Mischung mit dem Bitumen zwischen 120 °C und 130 °C beträgt,
• die Temperatur der Mischung zwischen den Granulaten und dem bituminösen Produkt bei der Verteilung zwischen 105 °C und 115 °C beträgt,
• die Temperatur der Mischung zwischen den Granulaten und dem bituminösen Produkt im Inneren des Belags am Beginn der Kompaktierung, wenn diese stattfindet, zwischen 100 °C und 105 °C beträgt;

- für ein Bitumen mit einer Penetration zwischen 10 und 20 vor dem Zusatz von Polymer(en) und enthaltend zwischen 4 und 8 % Polymer(e):

• die Temperatur der Granulate bei der Mischung mit dem Bitumen zwischen 165 °C und 185 °C beträgt,
• die Temperatur der Mischung zwischen den Granulaten und dem bituminösen Produkt bei der Verteilung zwischen 155 °C und 180 °C beträgt,
• die Temperatur der Mischung zwischen den Granulaten und dem bituminösen Produkt im Inneren des Belags am Beginn der Kompaktierung, wenn diese stattfindet, zwischen 155 °C und 180 °C beträgt;

- für ein Bitumen mit einer Penetration zwischen 20 und 35 vor dem Zusatz von Polymer(en) und enthaltend zwischen 4 und 8 % Polymer(e):

• die Temperatur der Granulate bei der Mischung mit dem Bitumen zwischen 155 °C und 165 °C beträgt,
• die Temperatur der Mischung zwischen den Granulaten und dem bituminösen Produkt bei der Verteilung zwischen 145 °C und 155 °C beträgt,
• die Temperatur der Mischung zwischen den Granulaten und dem bituminösen Produkt im Inneren des Belags am Beginn der Kompaktierung, wenn diese stattfindet, zwischen 145 °C und 155 °C beträgt;

- für ein Bitumen mit einer Penetration zwischen 35 und 50 vor dem Zusatz von Polymer(en) und enthaltend zwischen 4 und 8 % Polymer(e):

• die Temperatur der Granulate bei der Mischung mit dem Bitumen zwischen 145 °C und 155 °C beträgt,
• die Temperatur der Mischung zwischen den Granulaten und dem bituminösen Produkt bei der Verteilung zwischen 135 °C und 145 °C beträgt,
• die Temperatur der Mischung zwischen den Granulaten und dem bituminösen Produkt im Inneren des Belags am Beginn der Kompaktierung, wenn diese stattfindet, zwischen 130 °C und 145 °C beträgt;

- für ein Bitumen mit einer Penetration zwischen 50 und 70 vor dem Zusatz von Polymer(en) und enthaltend zwischen 4 und 8 % Polymer(e):

• die Temperatur der Granulate bei der Mischung mit dem Bitumen zwischen 135 °C und 145 °C beträgt,
• die Temperatur der Mischung zwischen den Granulaten und dem bituminösen Produkt bei der Verteilung zwischen 125 °C und 135 °C beträgt,
• die Temperatur der Mischung zwischen den Granulaten und dem bituminösen Produkt im Inneren des Belags am Beginn der Kompaktierung, wenn diese stattfindet, zwischen 125 °C und 130 °C beträgt;

- für ein Bitumen mit einer Penetration zwischen 70 und 100 vor dem Zusatz von Polymer(en) und enthaltend zwischen 4 und 8 % Polymer(e):

• die Temperatur der Granulate bei der Mischung mit dem Bitumen zwischen 125 °C und 135 °C beträgt,
• die Temperatur der Mischung zwischen den Granulaten und dem bituminösen Produkt bei der Verteilung zwischen 120 °C und 125 °C beträgt,
• die Temperatur der Mischung zwischen den Granulaten und dem bituminösen Produkt im Inneren des Belags am Beginn der Kompaktierung, wenn diese stattfindet, zwischen 120 °C und 125 °C beträgt;

- für ein Bitumen mit einer Penetration zwischen 100 und 160 vor dem Zusatz von Polymer(en) und enthaltend zwischen 4 und 8 % Polymer(e):

• die Temperatur der Granulate bei der Mischung mit dem Bitumen zwischen 125 °C und 135 °C beträgt,
• die Temperatur der Mischung zwischen den Granulaten und dem bituminösen Produkt bei der Verteilung zwischen 115 °C und 120 °C beträgt,
• die Temperatur der Mischung zwischen den Granulaten und dem bituminösen Produkt im Inneren des Belags am Beginn der Kompaktierung, wenn diese stattfindet, zwischen 115 °C und 120 °C beträgt;

- für ein reines Bitumen mit einer Penetration zwischen 160 und 250 vor dem Zusatz von Polymer(en) und enthaltend zwischen 4 und 8 % Polymer(e):

• die Temperatur der Granulate bei der Mischung mit dem Bitumen zwischen 125 °C und 135 °C beträgt,
• die Temperatur der Mischung zwischen den Granulaten und dem bituminösen Produkt bei der Verteilung zwischen 110 °C und 115 °C beträgt,
• die Temperatur der Mischung zwischen den Granulaten und dem bituminösen Produkt im Inneren des Belags am Beginn der Kompaktierung, wenn diese stattfindet, zwischen 110 °C und 115 °C beträgt.

4. Verfahren nach einem der Ansprüche 1 bis 3,
**dadurch gekennzeichnet, dass** das oder die Additive B auf erhitzten Granulaten pulverisiert werden, vor und/oder während des Zusatzes des bituminösen Produkts.

5. Verfahren nach einem der Ansprüche 1 bis 4,
**dadurch gekennzeichnet, dass** das oder die Additive B dem bituminösen Produkt stromaufwärts von der Mischzone zwischen Granulaten und bituminösem Produkt zugesetzt werden.

6. Verwendung von beschichteten Materialien, die gemäß dem Verfahren nach einem der Ansprüche 1 bis 5 hergestellt werden, zur Herstellung von Materialien auf dem Gebiet von Dichtungen, der Konstruktion und Wartung von Straßenbelägen, Gehsteigen, Radwegen, Spielplätzen, Parkplätzen und Flugzeugstart- und -landebahnen.

7. Oberfläche, Straßenbelag, Gehsteig, Radweg, Spielplatz, Parkplatz oder Flugzeugstart- und - landebahn, welche gänzlich oder teilweise mit mindestens einem beschichteten Material beschichtet sind, das gemäß dem Verfahren nach einem der Ansprüche 1 bis 5 erhalten wird.

**Claims**

1. Process for preparing a bituminous mix comprising at least aggregate, at least one bituminous product and at least one additive B, **characterized in that**:

   ➢ the additive B contains at least one compound (B1) of formula:

   $$(R-O-A-)_c-P(= O)-OH_d \qquad (B1)$$

   where P is the phosphorus atom, c is between 1 and 2, c + d is equal to 3,
   A represents a bond or a divalent group comprising at least one oxypropylene (OP) unit and/or at least one oxyethylene (OE) unit; and
   R represents a hydrocarbon-based chain having from 1 to 30 carbon atoms, the chain possibly being linear or branched, saturated or unsaturated, the chain possibly containing at least one aromatic or non-aromatic ring, and
   the dose of additive(s) B1 per tonne of bituminous product, being between 0.3 kg and 20 kg;
   
   ➢ the additive B optionally, but most often contains, phosphoric acid, the dose of phosphoric acid per tonne of bituminous product being less than 2 kg;
   
   ➢ the additive B optionally, but most often, contains at least one pyrophosphate of the compound B1 in a dose per tonne of bituminous product of less than 20 kg; and
   
   ➢ the bituminous product has a difference between the penetration index before contact with the aggregates and penetration index after extraction of the bituminous mix of less than 5 tenths of a millimetre for a bitumen having an initial penetration index between 20 and 30 tenths of a millimetre, of less than 15 tenths of a millimetre for a bitumen having an initial penetration index of between 35 and 50 tenths of a millimetre, of less than 20 tenths of a millimetre for a bitumen having an initial penetration index between 50 and 70 tenths of a millimetre, of less than 25 tenths of a millimetre for a bitumen having an initial penetration index between 70 tenths of a millimetre and 100 tenths of a millimetre, of less than 50 tenths of a millimetre for a bitumen having an initial penetration index between 160 and 220 tenths of a millimetre, said process comprising the physical mixing of said aggregates with said at least one bituminous product and said at least one additive B, in which:
   
   ➢ for a neat bitumen having a penetration index between 10 and 20:
   
   - the temperature of the aggregates during mixing with the bitumen is above 130°C,
   - the temperature of the mix of aggregates and bituminous product during spreading is between 120 and 150°C,
   - the temperature of the mix of aggregates and bituminous product within the road covering at the start of compacting, when it takes place, is between 120 and 150°C;
   
   ➢ for a neat bitumen having a penetration index between 20 and 35:
   
   - the temperature of the aggregates during mixing with the bitumen is above 120°C,
   - the temperature of the mix of aggregates and bituminous product during spreading is between 110 and 135°C,
   - the temperature of the mix of aggregates and bituminous product within the road covering at the start of compacting, when it takes place, is between 110 and 135°C;
   
   ➢ for a neat bitumen having a penetration index between 35 and 50:
   
   - the temperature of the aggregates during mixing with the bitumen is above 110°C,
   - the temperature of the mix of aggregates and bituminous product during spreading is between 95 and 125°C,
   - the temperature of the mix of aggregates and bituminous product within the road covering at the start of compacting, when it takes place, is between 95 and 125°C;

➢ for a neat bitumen having a penetration index between 50 and 70:

■ the temperature of the aggregates during mixing with the bitumen is above 105°C,
■ the temperature of the mix of aggregates and bituminous product during spreading is between 90 and 120°C,
■ the temperature of the mix of aggregates and bituminous product within the road covering at the start of compacting, when it takes place, is between 85 and 120°C;

➢ for a neat bitumen having a penetration index between 70 and 100:

■ the temperature of the aggregates during mixing with the bitumen is above 100°C,
■ the temperature of the mix of aggregates and bituminous product during spreading is between 85 and 115°C,
■ the temperature of the mix of aggregates and bituminous product within the road covering at the start of compacting, when it takes place, is between 85 and 115°C;

➢ for a neat bitumen having a penetration index between 100 and 160:

■ the temperature of the aggregates during mixing with the bitumen is above 100°C,
■ the temperature of the mix of aggregates and bituminous product during spreading is between 80 and 105°C,
■ the temperature of the mix of aggregates and bituminous product within the road covering at the start of compacting, when it takes place, is between 80 and 105°C;

➢ for a neat bitumen having a penetration index between 160 and 250:

■ the temperature of the aggregates during mixing with the bitumen is above 100°C,
■ the temperature of the mix of aggregates and bituminous product during spreading is between 75 and 100°C,
■ the temperature of the mix of aggregates and bituminous product within the road covering at the start of compacting, when it takes place, is between 75 and 100°C;

➢ for a bitumen having a penetration index between 10 and 20 before addition of polymer and containing between 1 and 4% of polymer(s):

■ the temperature of the aggregates during mixing with the bitumen is above 150°C,
■ the temperature of the mix of aggregates and bituminous product during spreading is between 145 and 175°C,
■ the temperature of the mix of aggregates and bituminous product within the road covering at the start of compacting, when it takes place, is between 145 and 175°C;

➢ for a bitumen having a penetration index between 20 and 35 before addition of polymer and containing between 1 and 4% of polymer(s):

■ the temperature of the aggregates during mixing with the bitumen is above 140°C, preferably between 140 and 165°C,
■ the temperature of the mix of aggregates and bituminous product during spreading is between 130 and 160°C,
■ the temperature of the mix of aggregates and bituminous product within the road covering at the start of compacting, when it takes place, is between 130 and 160°C;

➢ for a bitumen having a penetration index between 35 and 50 before addition of polymer and containing between 1 and 4% of polymer(s):

■ the temperature of the aggregates during mixing with the bitumen is above 130°C,
■ the temperature of the mix of aggregates and bituminous product during spreading is between 120 and 150°C,

42

- the temperature of the mix of aggregates and bituminous product within the road covering at the start of compacting, when it takes place, is between 120 and 150°C;

➢ for a bitumen having a penetration index between 50 and 70 before addition of polymer and containing between 1 and 4% of polymer(s):

- the temperature of the aggregates during mixing with the bitumen is above 120°C,
- the temperature of the mix of aggregates and bituminous product during spreading is between 115 and 140°C,
- the temperature of the mix of aggregates and bituminous product within the road covering at the start of compacting, when it takes place, is between 115 and 140°C;

➢ for a bitumen having a penetration index between 70 and 100 before addition of polymer and containing between 1 and 4% of polymer(s):

- the temperature of the aggregates during mixing with the bitumen is above 120°C, preferably between 120 and 140°C,
- the temperature of the mix of aggregates and bituminous product during spreading is between 110 and 135°C,
- the temperature of the mix of aggregates and bituminous product within the road covering at the start of compacting, when it takes place, is between 110 and 135°C;

➢ for a bitumen having a penetration index between 110 and 160 before addition of polymer and containing between 1 and 4% of polymer(s):

- the temperature of the aggregates during mixing with the bitumen is above 120°C,
- the temperature of the mix of aggregates and bituminous product during spreading is between 105 and 130°C,
- the temperature of the mix of aggregates and bituminous product within the road covering at the start of compacting, when it takes place, is between 105 and 130°C;

➢ for a neat bitumen having a penetration index between 160 and 250 before addition of polymer and containing between 1 and 4% of polymer(s):

- the temperature of the aggregates during mixing with the bitumen is above 120°C,
- the temperature of the mix of aggregates and bituminous product during spreading is between 100 and 125°C,
- the temperature of the mix of aggregates and bituminous product within the road covering at the start of compacting, when it takes place, is between 100 and 125°C;

➢ for a bitumen having a penetration index between 10 and 20 before addition of polymer and containing between 4 and 8% of polymer(s):

- the temperature of the aggregates during mixing with the bitumen is above 155°C,
- the temperature of the mix of aggregates and bituminous product during spreading is between 150 and 180°C,
- the temperature of the mix of aggregates and bituminous product within the road covering at the start of compacting, when it takes place, is between 150 and 180°C;

➢ for a bitumen having a penetration index between 20 and 35 before addition of polymer and containing between 4 and 8% of polymer(s):

- the temperature of the aggregates during mixing with the bitumen is above 145°C,
- the temperature of the mix of aggregates and bituminous product during spreading is between 135 and 165°C,
- the temperature of the mix of aggregates and bituminous product within the road covering at the start of compacting, when it takes place, is between 135 and 165°C;

➢ for a bitumen having a penetration index between 35 and 50 before addition of polymer and containing between 4 and 8% of polymer(s):

- the temperature of the aggregates during mixing with the bitumen is above 135°C,
- the temperature of the mix of aggregates and bituminous product during spreading is between 125 and 155°C,
- the temperature of the mix of aggregates and bituminous product within the road covering at the start of compacting, when it takes place, is between 125 and 155°C;

➢ for a bitumen having a penetration index between 50 and 70 before addition of polymer and containing between 4 and 8% of polymer(s):

- the temperature of the aggregates during mixing with the bitumen is above 130°C,
- the temperature of the mix of aggregates and bituminous product during spreading is between 120 and 145°C,
- the temperature of the mix of aggregates and bituminous product within the road covering at the start of compacting, when it takes place, is between 120 and 145°C;

➢ for a bitumen having a penetration index between 70 and 100 before addition of polymer and containing between 4 and 8% of polymer(s):

- the temperature of the aggregates during mixing with the bitumen is above 125°C,
- the temperature of the mix of aggregates and bituminous product during spreading is between 120 and 140°C,
- the temperature of the mix of aggregates and bituminous product within the road covering at the start of compacting, when it takes place, is between 115 and 140°C;

➢ for a bitumen having a penetration index between 100 and 160 before addition of polymer and containing between 4 and 8% of polymer(s):

- the temperature of the aggregates during mixing with the bitumen is above 125°C,
- the temperature of the mix of aggregates and bituminous product during spreading is between 115 and 135°C,
- the temperature of the mix of aggregates and bituminous product within the road covering at the start of compacting, when it takes place, is between 110 and 135°C;

➢ for a neat bitumen having a penetration index between 160 and 250 before addition of polymer and containing between 4 and 8% of polymer(s):

- the temperature of the aggregates during mixing with the bitumen is above 125°C,
- the temperature of the mix of aggregates and bituminous product during spreading is between 110 and 130°C,
- the temperature of the mix of aggregates and bituminous product within the road covering at the start of compacting, when it takes place, is between 105 and 130°C.

2. Process according to Claim 1, in which:

➢ for a neat bitumen having a penetration index between 10 and 20:

- the temperature of the aggregates during mixing with the bitumen is between 130 and 150°C,
- the temperature of the mix of aggregates and bituminous product during spreading is between 120 and 150°C,
- the temperature of the mix of aggregates and bituminous product within the road covering at the start of compacting, when it takes place, is between 120 and 150°C;

➢ for a neat bitumen having a penetration index between 20 and 35:

- the temperature of the aggregates during mixing with the bitumen is between 120 and 150°C,

44

- the temperature of the mix of aggregates and bituminous product during spreading is between 110 and 135°C,
- the temperature of the mix of aggregates and bituminous product within the road covering at the start of compacting, when it takes place, is between 110 and 135°C;

➢ for a neat bitumen having a penetration index between 35 and 50:

- the temperature of the aggregates during mixing with the bitumen is between 110 and 140°C,
- the temperature of the mix of aggregates and bituminous product during spreading is between 95 and 125°C,
- the temperature of the mix of aggregates and bituminous product within the road covering at the start of compacting, when it takes place, is between 95 and 125°C;

➢ for a neat bitumen having a penetration index between 50 and 70:

- the temperature of the aggregates during mixing with the bitumen is between 105 and 135°C,
- the temperature of the mix of aggregates and bituminous product during spreading is between 90 and 120°C,
- the temperature of the mix of aggregates and bituminous product within the road covering at the start of compacting, when it takes place, is between 85 and 120°C;

➢ for a neat bitumen having a penetration index between 70 and 100:

- the temperature of the aggregates during mixing with the bitumen is between 100 and 125°C,
- the temperature of the mix of aggregates and bituminous product during spreading is between 85 and 115°C,
- the temperature of the mix of aggregates and bituminous product within the road covering at the start of compacting, when it takes place, is between 85 and 115°C;

➢ for a neat bitumen having a penetration index between 100 and 160:

- the temperature of the aggregates during mixing with the bitumen is between 100 and 125°C,
- the temperature of the mix of aggregates and bituminous product during spreading is between 80 and 105°C,
- the temperature of the mix of aggregates and bituminous product within the road covering at the start of compacting, when it takes place, is between 80 and 105°C;

➢ for a neat bitumen having a penetration index between 160 and 250:

- the temperature of the aggregates during mixing with the bitumen is between 100 and 120°C,
- the temperature of the mix of aggregates and bituminous product during spreading is between 75 and 100°C,
- the temperature of the mix of aggregates and bituminous product within the road covering at the start of compacting, when it takes place, is between 75 and 100°C;

➢ for a bitumen having a penetration index between 10 and 20 before addition of polymer(s) and containing between 1 and 4% of polymer(s):

- the temperature of the aggregates during mixing with the bitumen is between 150 and 180°C,
- the temperature of the mix of aggregates and bituminous product during spreading is between 145 and 175°C,
- the temperature of the mix of aggregates and bituminous product within the road covering at the start of compacting, when it takes place, is between 145 and 175°C;

➢ for a bitumen having a penetration index between 20 and 35 before addition of polymer(s) and containing between 1 and 4% of polymer(s):

- the temperature of the aggregates during mixing with the bitumen is between 140 and 165°C,

■ the temperature of the mix of aggregates and bituminous product during spreading is between 130 and 160°C,

■ the temperature of the mix of aggregates and bituminous product within the road covering at the start of compacting, when it takes place, is between 130 and 160°C;

➢ for a bitumen having a penetration index between 35 and 50 before addition of polymer(s) and containing between 1 and 4% of polymer(s):

■ the temperature of the aggregates during mixing with the bitumen is between 130 and 155°C,

■ the temperature of the mix of aggregates and bituminous product during spreading is between 120 and 150°C,

■ the temperature of the mix of aggregates and bituminous product within the road covering at the start of compacting, when it takes place, is between 120 and 150°C;

➢ for a bitumen having a penetration index between 50 and 70 before addition of polymer(s) and containing between 1 and 4% of polymer(s):

■ the temperature of the aggregates during mixing with the bitumen is between 120 and 150°C,

■ the temperature of the mix of aggregates and bituminous product during spreading is between 115 and 140°C,

■ the temperature of the mix of aggregates and bituminous product within the road covering at the start of compacting, when it takes place, is between 115 and 140°C;

➢ for a bitumen having a penetration index between 70 and 100 before addition of polymer(s) and containing between 1 and 4% of polymer(s):

■ the temperature of the aggregates during mixing with the bitumen is between 120 and 140°C,

■ the temperature of the mix of aggregates and bituminous product during spreading is between 110 and 135°C,

■ the temperature of the mix of aggregates and bituminous product within the road covering at the start of compacting, when it takes place, is between 110 and 135°C;

➢ for a bitumen having a penetration index between 100 and 160 before addition of polymer(s) and containing between 1 and 4% of polymer(s):

■ the temperature of the aggregates during mixing with the bitumen is between 120 and 140°C,

■ the temperature of the mix of aggregates and bituminous product during spreading is between 105 and 130°C,

■ the temperature of the mix of aggregates and bituminous product within the road covering at the start of compacting, when it takes place, is between 105 and 130°C;

➢ for a neat bitumen having a penetration index between 160 and 250 before addition of polymer(s) and containing between 1 and 4% of polymer(s):

■ the temperature of the aggregates during mixing with the bitumen is between 120 and 140°C,

■ the temperature of the mix of aggregates and bituminous product during spreading is between 100 and 125°C,

■ the temperature of the mix of aggregates and bituminous product within the road covering at the start of compacting, when it takes place, is between 100 and 125°C;

➢ for a bitumen having a penetration index between 10 and 20 before addition of polymer(s) and containing between 4 and 8% of polymer(s):

■ the temperature of the aggregates during mixing with the bitumen is between 155 and 185°C,

■ the temperature of the mix of aggregates and bituminous product during spreading is between 150 and 180°C,

■ the temperature of the mix of aggregates and bituminous product within the road covering at the start of compacting, when it takes place, is between 150 and 180°C;

➢ for a bitumen having a penetration index between 20 and 35 before addition of polymer(s) and containing between 4 and 8% of polymer(s):

■ the temperature of the aggregates during mixing with the bitumen is between 145 and 170°C,
■ the temperature of the mix of aggregates and bituminous product during spreading is between 135 and 165°C,
■ the temperature of the mix of aggregates and bituminous product within the road covering at the start of compacting, when it takes place, is between 135 and 165°C;

➢ for a bitumen having a penetration index between 35 and 50 before addition of polymer(s) and containing between 4 and 8% of polymer(s):

■ the temperature of the aggregates during mixing with the bitumen is between 135 and 160°C,
■ the temperature of the mix of aggregates and bituminous product during spreading is between 125 and 155°C,
■ the temperature of the mix of aggregates and bituminous product within the road covering at the start of compacting, when it takes place, is between 125 and 155°C;

➢ for a bitumen having a penetration index between 50 and 70 before addition of polymer(s) and containing between 4 and 8% of polymer(s):

■ the temperature of the aggregates during mixing with the bitumen is between 130 and 155°C,
■ the temperature of the mix of aggregates and bituminous product during spreading is between 120 and 145°C,
■ the temperature of the mix of aggregates and bituminous product within the road covering at the start of compacting, when it takes place, is between 120 and 145°C;

➢ for a bitumen having a penetration index between 70 and 100 before addition of polymer(s) and containing between 4 and 8% of polymer(s):

■ the temperature of the aggregates during mixing with the bitumen is between 125 and 145°C,
■ the temperature of the mix of aggregates and bituminous product during spreading is between 120 and 140°C,
■ the temperature of the mix of aggregates and bituminous product within the road covering at the start of compacting, when it takes place, is between 115 and 140°C;

➢ for a bitumen having a penetration index between 100 and 160 before addition of polymer(s) and containing between 4 and 8% of polymer(s):

■ the temperature of the aggregates during mixing with the bitumen is between 125 and 145°C,
■ the temperature of the mix of aggregates and bituminous product during spreading is between 115 and 135°C,
■ the temperature of the mix of aggregates and bituminous product within the road covering at the start of compacting, when it takes place, is between 110 and 135°C;

➢ for a neat bitumen having a penetration index between 160 and 250 before addition of polymer(s) and containing between 4 and 8% of polymer(s):

■ the temperature of the aggregates during mixing with the bitumen is between 125 and 145°C,
■ the temperature of the mix of aggregates and bituminous product during spreading is between 110 and 130°C,
■ the temperature of the mix of aggregates and bituminous product within the road covering at the start of compacting, when it takes place, is between 105 and 130°C.

3. Process according to either of Claims 1 and 2, **characterized in that**:

➢ for a neat bitumen having a penetration index between 10 and 20:

- the temperature of the aggregates during mixing with the bitumen is between 135 and 150°C,
- the temperature of the mix of aggregates and bituminous product during spreading is between 125 and 145°C,
- the temperature of the mix of aggregates and bituminous product within the road covering at the start of compacting, when it takes place, is between 125 and 145°C;

➢ for a neat bitumen having a penetration index between 20 and 35:

- the temperature of the aggregates during mixing with the bitumen is between 125 and 135°C,
- the temperature of the mix of aggregates and bituminous product during spreading is between 115 and 125°C,
- the temperature of the mix of aggregates and bituminous product within the road covering at the start of compacting, when it takes place, is between 105 and 125°C;

➢ for a neat bitumen having a penetration index between 35 and 50:

- the temperature of the aggregates during mixing with the bitumen is between 115 and 125°C,
- the temperature of the mix of aggregates and bituminous product during spreading is between 105 and 115°C,
- the temperature of the mix of aggregates and bituminous product within the road covering at the start of compacting, when it takes place, is between 95 and 105°C;

➢ for a neat bitumen having a penetration index between 50 and 70:

- the temperature of the aggregates during mixing with the bitumen is between 105 and 115°C,
- the temperature of the mix of aggregates and bituminous product during spreading is between 95 and 105°C,
- the temperature of the mix of aggregates and bituminous product within the road covering at the start of compacting, when it takes place, is between 85 and 95°C;

➢ for a neat bitumen having a penetration index between 70 and 100:

- the temperature of the aggregates during mixing with the bitumen is between 100 and 105°C,
- the temperature of the mix of aggregates and bituminous product during spreading is between 85 and 95°C,
- the temperature of the mix of aggregates and bituminous product within the road covering at the start of compacting, when it takes place, is between 85 and 95°C;

➢ for a neat bitumen having a penetration index between 100 and 160:

- the temperature of the aggregates during mixing with the bitumen is between 100 and 105°C,
- the temperature of the mix of aggregates and bituminous product during spreading is between 85 and 95°C,
- the temperature of the mix of aggregates and bituminous product within the road covering at the start of compacting, when it takes place, is between 85 and 95°C;

➢ for a neat bitumen having a penetration index between 160 and 250:

- the temperature of the aggregates during mixing with the bitumen is between 100 and 105°C,
- the temperature of the mix of aggregates and bituminous product during spreading is between 80 and 85°C,
- the temperature of the mix of aggregates and bituminous product within the road covering at the start of compacting, when it takes place, is between 80 and 85°C;

➢ for a bitumen having a penetration index between 10 and 20 before addition of polymer(s) and containing between 1 and 4% of polymer(s):

- the temperature of the aggregates during mixing with the bitumen is between 150 and 180°C,

■ the temperature of the mix of aggregates and bituminous product during spreading is between 145 and 175°C,
■ the temperature of the mix of aggregates and bituminous product within the road covering at the start of compacting, when it takes place, is between 145 and 175°C;

➤ for a bitumen having a penetration index between 20 and 35 before addition of polymer(s) and containing between 1 and 4% of polymer(s):

■ the temperature of the aggregates during mixing with the bitumen is between 140 and 150°C,
■ the temperature of the mix of aggregates and bituminous product during spreading is between 130 and 145°C,
■ the temperature of the mix of aggregates and bituminous product within the road covering at the start of compacting, when it takes place, is between 130 and 145°C;

➤ for a bitumen having a penetration index between 35 and 50 before addition of polymer(s) and containing between 1 and 4% of polymer(s):

■ the temperature of the aggregates during mixing with the bitumen is between 130 and 140°C,
■ the temperature of the mix of aggregates and bituminous product during spreading is between 120 and 130°C,
■ the temperature of the mix of aggregates and bituminous product within the road covering at the start of compacting, when it takes place, is between 120 and 130°C;

➤ for a bitumen having a penetration index between 50 and 70 before addition of polymer(s) and containing between 1 and 4% of polymer(s):

■ the temperature of the aggregates during mixing with the bitumen is between 120 and 130°C,
■ the temperature of the mix of aggregates and bituminous product during spreading is between 115 and 120°C,
■ the temperature of the mix of aggregates and bituminous product within the road covering at the start of compacting, when it takes place, is between 110 and 120°C;

➤ for a bitumen having a penetration index between 70 and 100 before addition of polymer(s) and containing between 1 and 4% of polymer(s):

■ the temperature of the aggregates during mixing with the bitumen is between 120 and 130°C,
■ the temperature of the mix of aggregates and bituminous product during spreading is between 115 and 120°C,
■ the temperature of the mix of aggregates and bituminous product within the road covering at the start of compacting, when it takes place, is between 110 and 120°C;

➤ for a bitumen having a penetration index between 100 and 160 before addition of polymer(s) and containing between 1 and 4% of polymer(s):

■ the temperature of the aggregates during mixing with the bitumen is between 120 and 130°C,
■ the temperature of the mix of aggregates and bituminous product during spreading is between 105 and 115°C,
■ the temperature of the mix of aggregates and bituminous product within the road covering at the start of compacting, when it takes place, is between 105 and 110°C;

➤ for a neat bitumen having a penetration index between 160 and 250 before addition of polymer(s) and containing between 1 and 4% of polymer(s):

■ the temperature of the aggregates during mixing with the bitumen is between 120 and 130°C,
■ the temperature of the mix of aggregates and bituminous product during spreading is between 105 and 115°C,
■ the temperature of the mix of aggregates and bituminous product within the road covering at the start of compacting, when it takes place, is between 100 and 105°C;

➤ for a bitumen having a penetration index between 10 and 20 before addition of polymer(s) and containing between 4 and 8% of polymer(s):

- the temperature of the aggregates during mixing with the bitumen is between 165 and 185°C,
- the temperature of the mix of aggregates and bituminous product during spreading is between 155 and 180°C,
- the temperature of the mix of aggregates and bituminous product within the road covering at the start of compacting, when it takes place, is between 155 and 180°C;

➤ for a bitumen having a penetration index between 20 and 35 before addition of polymer(s) and containing between 4 and 8% of polymer(s):

- the temperature of the aggregates during mixing with the bitumen is between 155 and 165°C,
- the temperature of the mix of aggregates and bituminous product during spreading is between 145 and 155°C,
- the temperature of the mix of aggregates and bituminous product within the road covering at the start of compacting, when it takes place, is between 145 and 155°C;

➤ for a bitumen having a penetration index between 35 and 50 before addition of polymer(s) and containing between 4 and 8% of polymer(s):

- the temperature of the aggregates during mixing with the bitumen is between 145 and 155°C,
- the temperature of the mix of aggregates and bituminous product during spreading is between 135 and 145°C,
- the temperature of the mix of aggregates and bituminous product within the road covering at the start of compacting, when it takes place, is between 130 and 145°C;

➤ for a bitumen having a penetration index between 50 and 70 before addition of polymer(s) and containing between 4 and 8% of polymer(s):

- the temperature of the aggregates during mixing with the bitumen is between 135 and 145°C,
- the temperature of the mix of aggregates and bituminous product during spreading is between 125 and 135°C,
- the temperature of the mix of aggregates and bituminous product within the road covering at the start of compacting, when it takes place, is between 125 and 130°C;

➤ for a bitumen having a penetration index between 70 and 100 before addition of polymer(s) and containing between 4 and 8% of polymer(s):

- the temperature of the aggregates during mixing with the bitumen is between 125 and 135°C,
- the temperature of the mix of aggregates and bituminous product during spreading is between 120 and 125°C,
- the temperature of the mix of aggregates and bituminous product within the road covering at the start of compacting, when it takes place, is between 120 and 125°C;

➤ for a bitumen having a penetration index between 100 and 160 before addition of polymer(s) and containing between 4 and 8% of polymer(s):

- the temperature of the aggregates during mixing with the bitumen is between 125 and 135°C,
- the temperature of the mix of aggregates and bituminous product during spreading is between 115 and 120°C,
- the temperature of the mix of aggregates and bituminous product within the road covering at the start of compacting, when it takes place, is between 115 and 120°C;

➤ for a neat bitumen having a penetration index between 160 and 250 before addition of polymer(s) and containing between 4 and 8% of polymer(s):

- the temperature of the aggregates during mixing with the bitumen is between 125 and 135°C,
- the temperature of the mix of aggregates and bituminous product during spreading is between 110 and 115°C,
- the temperature of the mix of aggregates and bituminous product within the road covering at the start of compacting, when it takes place, is between 110 and 115°C.

4. Process according to any one of Claims 1 to 3, **characterized in that** the additive or additives B are sprayed onto the heated aggregates, before and/or during the addition of the bituminous product.

5. Process according to any one of Claims 1 to 4, **characterized in that** the additive or additives B are added to the bituminous product upstream of the zone for mixing the aggregates and bituminous product.

6. Use of bituminous mixes prepared according to the process of any one of Claims 1 to 5, for producing materials in the field of sealing, construction and repair of road coverings, pavements, cycle paths, playgrounds, parking areas and aircraft runways.

7. Surface, road covering, pavement, cycle path, playground, parking area or aircraft runway completely or partly covered with at least one bituminous mix obtained according to the process of any one of Claims 1 to 5.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5820663 A
- US 6024788 A
- US 6261356 B
- US 2693425 A
- EP 0792918 B1
- EP 0157210 A
- US 6588974 B
- US 4371400 A
- US 20040033308 A
- US 20050076810 A
- WO 2005100480 A
- WO 9720890 A
- EP 1263885 B1
- EP 1469038 A1
- EP 1712680 A1
- EP 1323867 A

**Littérature non-brevet citée dans la description**

- Radiocarbon and Isotope Ratio Mass Spectroscopy Analysis. *ASTM D 6866-06*